# EUROPEAN PATENT SPECIFICATION

(11) **EP 4 239 735 B1**
(45) Date of publication and mention of the grant of the patent: **23.04.2025**
(21) Application number: 21897888.0
(22) Date of filing: 19.11.2021
(51) Int. Cl.: H01M 8/0206, H01M 8/0213, H01M 8/0215, H01M 8/0226, H01M 8/0228, H01M 8/0245, C23C 24/04, C23C 24/08, C23C 8/02, C23C 8/10, C23C 8/12, C23C 8/80

(54) **SURFACE TREATMENT TITANIUM MATERIAL FOR FUEL CELL SEPARATOR, AND METHOD FOR MANUFACTURING SAID MATERIAL**
OBERFLÄCHENBEHANDLUNGSTITANMATERIAL FÜR BRENNSTOFFZELLENSEPARATOR UND VERFAHREN ZUR HERSTELLUNG DIESES MATERIALS
MATÉRIAU EN TITANE DE TRAITEMENT DE SURFACE POUR SÉPARATEUR DE PILE À COMBUSTIBLE, ET PROCÉDÉ DE FABRICATION DUDIT MATÉRIAU

(30) Priority: 27.11.2020 JP 2020197464
(43) Date of publication of application: 06.09.2023
(73) Proprietor: KABUSHIKI KAISHA KOBE SEIKO SHO (KOBE STEEL, LTD.), Hyogo 651-8585 (JP); TOYOTA JIDOSHA KABUSHIKI KAISHA, Toyota-shi Aichi 471-8571 (JP)
(72) Inventor: SATO, Toshiki, Kobe-shi, Hyogo 651-2271 (JP); SUZUKI, Jun, Takasago-shi, Hyogo 676-8670 (JP); IKEDA, Kotaro, Toyota-cho, Aichi-ken 471-8571 (JP); WATANABE, Yusuke, Toyota-cho, Aichi-ken 471-8571 (JP); ITAKURA, Takuya, Toyota-cho, Aichi-ken 471-8571 (JP); TAMBO, Tomoki, Toyota-cho, Aichi-ken 471-8571 (JP)
(74) Representative: Müller-Boré & Partner Patentanwälte PartG mbB
(86) International application number: PCT/JP2021/042691
(87) International publication number: WO 2022/113915

(56) References cited:
- EP-A1- 3 565 042
- WO-A1-2017/169712
- JP-A- 2018 067 450
- JP-A- 2019 133 862
- JP-A- 2019 160 737
- JP-A- 2020 113 397
- JP-A- 2020 152 999
- US-A1- 2017 194 657

## Description

### TECHNICAL FIELD

The present invention relates to a surface-treated titanium material for a fuel cell separator and a method for manufacturing the same, and particularly relates to a surface-treated titanium material for a fuel cell separator capable of maintaining high conductivity for a long period of time, and a method for manufacturing the same.

### BACKGROUND ART

A separator that partitions respective cells of a fuel cell has a role of forming a flow path of a fuel gas and causing a current generated from a cell to flow to an adjacent cell. Accordingly, a material for a fuel cell separator is required to have high conductivity and maintain the conductivity for a long period of time even in a corrosive atmosphere in the fuel cell.

As a separator material satisfying such requirements, for example, Patent Literature 1 discloses a separator material for a fuel cell in which a mixture layer in which titanium oxide mainly composed of rutile and carbon black are mixed is formed on a surface of a titanium substrate.

According to the separator material for a fuel cell disclosed in Patent Literature 1, since a mixture layer contains carbon black that is stable against oxidation, it is possible to achieve both high conductivity and conductive corrosion resistance. Other separators and methods for their manufacture are also described in Patent Literature 2 and 3.

### CITATION LIST

### PATENT LITERATURE

Patent Literature 1: JP2016-122642A
Patent Literature 2: US 2017/0194657 A1
Patent Literature 3: EP 3565042A1

### SUMMARY OF INVENTION

### TECHNICAL PROBLEM

In order to increase power generation efficiency of the fuel cell, a width of a flow path groove of the fuel gas in the separator may be formed to be narrow.

However, when a separator having such narrow grooves is manufactured by press molding, the mixture layer containing titanium oxide mainly composed of rutile may be peeled off from the surface of the titanium substrate. In addition, since the above-mentioned mixture layer does not have sufficient toughness, numerous cracks are introduced into the mixture layer during the press molding, and a corrosive acidic solution in the fuel cell easily reaches the interface between the mixture layer and the titanium substrate through the cracks. As a result, there arises a problem that interfacial corrosion progresses and the conductivity decreases.

Therefore, it is desired to develop a separator material having a titanium substrate and a surface layer, which can improve adhesion between the surface layer and the substrate and toughness of the surface layer, and can maintain conductivity for a long period of time even when press molding for forming narrow grooves is performed.

The present invention has been made in view of the above problems, and an object of the present invention is to provide a surface-treated titanium material for a fuel cell separator, which has good toughness, and is excellent in adhesion between a surface layer and a substrate and capable of maintaining conductivity for a long period of time even when press molding is performed under severe conditions, and a method for manufacturing the surface-treated titanium material for a fuel cell separator.

### SOLUTION TO PROBLEM

The above-mentioned object of the present invention is achieved by the following configuration [1] according to the surface-treated titanium material for a fuel cell separator.
[1] A surface-treated titanium material for a fuel cell separator, including:
   a titanium substrate having a passive film on a surface thereof; and a surface layer formed on the titanium substrate, in which
   the surface layer includes a titanium oxide layer and carbon particles,
   the carbon particles are dispersed in an inside of the titanium oxide layer, the titanium oxide layer contains Ti₂O₃ and TiO₂,
   a total film thickness of the titanium oxide layer and the passive film is 25 nm or more,
   in a case where a peak separation is performed on a Raman spectrum of a combination of the surface layer and the passive film, as set out in the description, when a height of a peak obtained in a range of 235 cm⁻¹ to 252 cm⁻¹ of a Raman shift representing TiO₂ is defined as I1, a height of a peak obtained in a range of 260 cm⁻¹ to 276 cm⁻¹ of a Raman shift representing Ti₂O₃ is defined as I2, and a height of a peak obtained in a range of 292 cm⁻¹ to 303 cm⁻¹ of a Raman shift is representing Ti₂O₃ is defined as I3, (I2+I3)/I1 is 0.08 or more and 1.45 or less, and
   in a case where an arbitrary cross section is observed with a field emission scanning electron microscope, when a length of an interface between the titanium oxide layer and the titanium substrate in an observation region is defined as L1 and a length of a void existing in the interface is defined as L2, L2/L1 is 0.30 or less.
   The above-mentioned object of the present invention is achieved by the following configurations [2] or [3] according to a method for manufacturing a surface-treated titanium material for a fuel cell separator.
[2] A method for manufacturing the surface-treated titanium material for a fuel cell separator according to [1], including:
   a step of annealing a titanium substrate;
   a step of coating a surface of the annealed titanium substrate with carbon particles;
   an oxidation treatment step of thermally treating the titanium substrate coated with the carbon particles in an oxidizing atmosphere to form a titanium oxide layer including the carbon particles;
   a washing step of removing carbon particles not adhering tightly to the titanium oxide layer from a surface of the titanium oxide layer; and
   a reduction treatment step of heat-treating the titanium substrate having the titanium oxide layer formed thereon in a vacuum or in an inert gas atmosphere to form a surface layer
   by generating Ti₂O₃ in the reduction treatment step and forming a titanium oxide layer containing Ti₂O₃ and TiO₂,
   wherein an average carbon concentration from the outermost surface of the titanium substrate to a position at a depth of 50 nm measured by X-ray photoelectron spectroscopy is 10 atom% or less.
[3] A method for manufacturing the surface-treated titanium material for a fuel cell separator according to [1], including:
   a step of annealing a titanium substrate;
   a step of coating a surface of the annealed titanium substrate with carbon particles;
   an oxidation treatment step of thermally treating the titanium substrate coated with the carbon particles in an oxidizing atmosphere to form a titanium oxide layer including the carbon particles;
   a reduction treatment step of heat-treating the titanium substrate having the titanium oxide layer formed thereon in a vacuum or in an inert gas atmosphere to form a surface layer by generating Ti₂O₃ in the reduction treatment step and forming a titanium oxide layer containing Ti₂O₃ and TiO₂; and
   a washing step of removing carbon particles not adhering tightly to the titanium oxide layer from a surface of the titanium oxide layer
   wherein an average carbon concentration from the outermost surface of the titanium substrate to a position at a depth of 50 nm measured by X-ray photoelectron spectroscopy is 10 atom% or less.

### ADVANTAGEOUS EFFECTS OF INVENTION

According to the present invention, it is possible to provide a surface-treated titanium material for a fuel cell separator, which has good toughness, and is excellent in adhesion between a surface layer and a substrate and capable of maintaining conductivity for a long period of time even when press molding is performed under severe conditions, and a method for manufacturing the surface-treated titanium material for a fuel cell separator.

### BRIEF DESCRIPTION OF DRAWINGS

[Fig. 1] Fig. 1 is a schematic view illustrating a structure of a surface-treated titanium material for a fuel cell separator according to the present embodiment.
[Fig. 2] Fig. 2 is a drawing-substitute photograph illustrating an example of a cross section of the surface-treated titanium material captured by a field emission scanning electron microscope.
[Fig. 3] Fig. 3 is a graph illustrating a relation between (I2+I3)/I1 and a contact resistance when the horizontal axis represents (I2+I3)/I1 and the vertical axis represents the contact resistance.
[Fig. 4] (1), (2), and (3) of Fig. 4 are views illustrating a method for measuring a content of carbon particles in a titanium oxide layer.
[Fig. 5] Fig. 5 is a schematic view illustrating a vacuum chamber used for an oxidation treatment.
[Fig. 6] Fig. 6 is a graph illustrating an example of a relation between a heating temperature in an oxidation treatment step and a temperature of a titanium foil when the horizontal axis represents a heating time and the vertical axis represents the temperature of the titanium foil.
[Fig. 7] Fig. 7 is a schematic view illustrating a continuous annealing furnace used in Examples.
[Fig. 8] Fig. 8 is a graph illustrating an example of a relation between a heating temperature in a reduction treatment step and a temperature of a titanium foil when the horizontal axis represents a heating time and the vertical axis represents the temperature of the titanium foil.
[Fig. 9] Fig. 9 is a schematic view illustrating a contact resistance measuring instrument.
[Fig. 10] Fig. 10 is a graph illustrating an example of a sample obtained by performing peak separation on a Raman spectrum.
[Fig. 11] Fig. 11 is a graph illustrating a standard spectrum of Ti₂O₃.
[Fig. 12] Fig. 12 is a graph illustrating a standard spectrum of TiO₂ (rutile).
[Fig. 13] Fig. 13 is a graph illustrating a relation between a heater set temperature and a film thickness when the horizontal axis represents the heater set temperature during the oxidation treatment and the vertical axis represents the film thickness.
[Fig. 14] Fig. 14 is a graph illustrating a relation between the heater set temperature and a void ratio when the horizontal axis represents the heater set temperature during the oxidation treatment and the vertical axis represents the void ratio.
[Fig. 15] Fig. 15 is a drawing-substitute photograph illustrating cross sections of Comparative Example No. 7, Example No. 15, and Example No. 16 captured by an SEM.

### DESCRIPTION OF EMBODIMENTS

Hereinafter, embodiments of the present invention (hereinafter, referred to as "the present embodiment") will be described in detail. The present invention is not limited to the embodiments described below, and can be optionally modified and implemented without departing from the present invention.

In addition, in the present description, the word "to" indicating a numerical range is used to mean including numerical values described before and after the word as a lower limit value and an upper limit value.

### [Surface-treated Titanium Material for Fuel Cell Separator]

In order to obtain a surface-treated titanium material that avoids interfacial peeling, has a titanium oxide layer with high toughness (cracks are less likely to occur), and can maintain high conductivity, the present inventors have conducted intensive studies. As a result, the inventors have found that it is effective to appropriately control a ratio of Ti₂O₃ to TiO₂ in the titanium oxide layer and to reduce a region of voids. Hereinafter, the surface-treated titanium material for a fuel cell separator according to the present embodiment will be described in more detail. In the present description, the surface-treated titanium material for a fuel cell separator may be simply referred to as a surface-treated titanium material.

### <Structure of Surface-treated Titanium Material for Fuel Cell Separator>

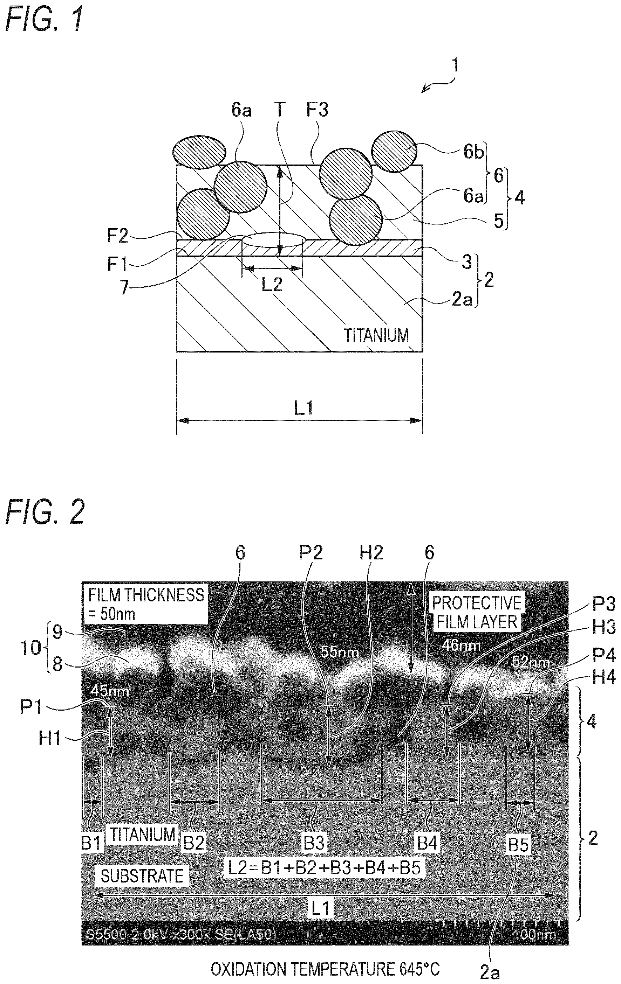

Fig. 1 is a schematic view illustrating a structure of the surface-treated titanium material for a fuel cell separator according to the present embodiment.

A surface-treated titanium material 1 includes a titanium substrate 2 having a passive film 3 on at least a part of a surface, and a surface layer 4 formed on the titanium substrate 2.

The surface layer 4 includes a titanium oxide layer 5 and carbon particles 6. Carbon particles 6a are dispersed in an inside of the titanium oxide layer 5, and some of carbon particles 6b adhere tightly to a surface of the titanium oxide layer 5. In addition, voids are inevitably formed at an interface F2 between the titanium substrate 2 and the surface layer 4.

On a surface of the titanium substrate 2, a passive film (amorphous titanium oxide layer) having a thickness of 3 nm to 10 nm originally exists, and the passive film 3 remains also in the surface-treated titanium material 1 obtained by a manufacturing method according to the present embodiment. A thickness of the remaining passive film 3 may be different from a thickness of the passive film originally exists on the surface of the titanium substrate 2, and the passive film 3 in the surface-treated titanium material 1 according to the present embodiment refers to a passive film remaining after the manufacture. Hereinafter, the passive film remaining after the manufacture is simply referred to as the passive film 3, and a portion of the titanium substrate 2 excluding the passive film 3 is referred to as a metallic titanium layer 2a.

### (Total Film Thickness T of Titanium Oxide Layer and Passive Film: 25 nm or more)

The carbon particles 6 are stable against oxidation and serve as a conductive path through which a current generated from a cell flows to an adjacent cell.

Although depending on a size of the carbon particles 6, when a total film thickness T of the titanium oxide layer 5 and the passive film 3 is less than 25 nm, the carbon particles 6 cannot be sufficiently incorporated into the titanium oxide layer 5, and a desired conductivity cannot be obtained. Therefore, the total film thickness T of the titanium oxide layer 5 and the passive film 3 is 25 nm or more, and preferably 30 nm or more.

On the other hand, when the total film thickness T of the titanium oxide layer 5 and the passive film 3 is less than 50 nm, it is possible to prevent voids 7 from being excessively formed along the interface F2 between the titanium oxide layer 5 and the passive film 3 of the titanium substrate 2. As a result, when a fuel cell separator obtained by performing press molding on the surface-treated titanium material 1 is used, even when a corrosive acidic solution reaches the interface F2 through pores or cracks in the surface layer 4, the acidic solution can be prevented from spreading to the interface F2 because there are few voids 7 through which the acidic solution enters. As a result, corrosion can be avoided, and the conductivity of the fuel cell separator can be maintained. Therefore, the total film thickness T of the titanium oxide layer 5 and the passive film 3 is preferably less than 50 nm.

A thickness of the titanium oxide layer 5 varies depending on a plane orientation of crystal grains of the titanium substrate 2. A color of the titanium oxide layer 5 varies depending on the thickness thereof, and the color varies from yellow, orange, brown, purple, blue, and light blue in an ascending order of thickness. Therefore, when the surface is observed with an optical microscope or the like, each crystal grain has a different color, which indicates that the thickness of the titanium oxide layer 5 is not uniform. In the present description, the total film thickness T of the titanium oxide layer 5 and the passive film 3 refers to a total film thickness of the titanium oxide layer 5 and the passive film 3 in a case where a cross section of a portion with a color having the highest proportion is observed when viewed with an optical microscope. Hereinafter, the total film thickness T of the titanium oxide layer 5 and the passive film 3 may be simply referred to as a film thickness T.

Fig. 2 is a drawing-substitute photograph illustrating an example of a cross section of the surface-treated titanium material captured by a field emission scanning electron microscope. A method for calculating the total film thickness T of the titanium oxide layer and the passive film will be described in detail using Fig. 2.

First, a surface of the surface-treated titanium material 1 is observed with an optical microscope or the like, and a portion with a color having the highest proportion is subjected to cross-section processing using a Cross section polisher (CP (registered trademark)).

Next, a cross section is observed at a magnification of 300,000 times using the field emission scanning electron microscope (FE-SEM).

Thereafter, four regions where the carbon particles 6 do not exist on an outermost surface F3 of the titanium oxide layer 5 are searched in a range of an observation field of view, film thicknesses (distances from an interface F1 in the titanium substrate 2 between the metallic titanium layer 2a and the passive film 3 to the outermost surface F3 of the titanium oxide layer 5) T in the regions are measured, and an average of the four regions is set as the film thickness T.

In the present embodiment, a protective layer 10 is formed to protect the carbon particles 6 and the titanium oxide layer 5 before the cross-section processing using the CP is performed. The protective layer 10 can be obtained by, for example, forming an osmium film 8 on a surface of the surface layer 4 by vapor deposition and then forming a carbon film 9.

In Fig. 2, positions of the four regions where the carbon particles 6 do not exist on an outermost surface are represented by P1, P2, P3, and P4, and the distances from the interface F1 to P1, P2, P3, and P4 are represented by H1, H2, H3, and H4, respectively. In Fig. 2, H1 is 45 nm, H2 is 55 nm, H3 is 46 nm, and H4 is 52 nm. Therefore, the film thickness T of the surface-treated titanium material 1 illustrated in Fig. 2 can be calculated by (H1+H2+H3+H4)/4 and is, for example, 50 nm.

### <(I2+I3)/I1: 0.08 or more and 1.45 or less>

In the present invention, the titanium oxide layer 5 contains Ti₂O₃ and TiO₂, and Ti₂O₃ has a metallic bonding component (High-temperature oxidation and high-temperature corrosion of metal material, 3rd edition, Table 2.3 on p40, edited by Japan Society of Corrosion Engineering). Therefore, it is considered that when an existing ratio of Ti₂O₃ in the titanium oxide layer 5 is increased, the titanium oxide layer 5 is easily plastically deformed and interfacial peeling is avoided when press molding is performed under severe conditions.

Accordingly, in the present invention, a content of Ti₂O₃ with respect to a content of TiO₂ is calculated using a peak height indicating TiO₂ of a rutile structure and a peak height indicating Ti₂O₃ when an analysis is performed by Raman spectroscopy.

In a case where peak separation is performed on a Raman spectrum of a combination of the surface layer and the passive film, a peak obtained in a range of 235 cm⁻¹ to 252 cm⁻¹ of a Raman shift represents TiO₂, and a height of the peak is defined as I1 in the present embodiment. Similarly, a peak obtained in a range of 260 cm⁻¹ to 276 cm⁻¹ and a peak obtained in a range of 292 cm⁻¹ to 303 cm⁻¹ each represent Ti₂O₃, and heights of these peaks are defined as I2 and I3, respectively.

That is, the content of Ti₂O₃ with respect to the content of TiO₂ is expressed by (I2+I3)/I1.

When (I2+I3)/I1 is less than 0.08, a content of TiO₂ having high brittleness in the titanium oxide layer 5 is increased, and thus peeling of the titanium oxide layer 5 may occur when press molding is performed. In addition, even when peeling does not occur, many cracks are formed in the titanium oxide layer 5. As a result, the corrosive acidic solution generated in the fuel cell enters the interface F2 between the surface layer 4 and the titanium substrate 2 through a peeled interface or cracks to corrode the passive film 3 and/or the metallic titanium layer 2a adjacent to the passive film 3, so that the conductivity of the separator decreases.

Therefore, (I2+I3)/I1 is 0.08 or more, and preferably 0.2 or more.

Such titanium oxide including Ti₂O₃ mixed therein is not formed only by performing an oxidation treatment on a titanium substrate coated with carbon particles such as carbon black under a lowpressure oxygen atmosphere. It is obtained by, after the oxidation, performing a heat treatment (reduction treatment) in vacuum or in an inert gas atmosphere to cause oxygen of a titanium oxide (TiO₂) having a rutile structure or an anatase structure formed in the oxidation treatment step to be diffused and absorbed into the titanium substrate. That is, since a part of oxygen of TiO₂ is extracted by titanium, TiO₂ is converted into Ti₂O₃.

However, since a volume of Ti₂O₃ per mole of titanium is about 16% smaller than that of rutiletype TiO₂, a volume shrinkage of the titanium oxide layer 5 progresses as conversion from TiO₂ to Ti₂O₃ progresses. Therefore, it is considered that the titanium oxide layer 5 may be made porous or an excessive tensile stress may be generated in the titanium oxide layer 5. Therefore, although Ti₂O₃ has a metallic bonding component, when the content of Ti₂O₃ is excessive, cracks are easily introduced into the titanium oxide layer 5 when the titanium oxide layer 5 is stretched by the press molding.

When the corrosive acidic solution generated in the fuel cell enters the inside of the titanium oxide layer 5 through the pores and cracks thus formed, the corrosive acidic solution reaches the interface F2 between the titanium substrate 2 and the surface layer 4 to corrode the passive film 3 and/or the metallic titanium layer 2a adjacent to the passive film 3. As a result, an amorphous titanium oxide layer having low conductivity is formed between the carbon particles 6 that impart conductivity and the titanium substrate 2, and the conductivity of the separator deteriorates. Therefore, it is also necessary to define an upper limit of the content of Ti₂O₃ in the titanium oxide layer 5.

When (I2+I3)/I1 exceeds 1.45, Ti₂O₃ is excessively formed in the titanium oxide layer 5, and thus the conductivity of the separator decreases. Therefore, (I2+I3)/I1 is 1.45 or less, and preferably 1.1 or less.

The reason why a sum (I2+I3) of the two peak heights is taken to represent the content of Ti₂O₃ is that, peak intensity is small with only one of the peaks, and it may be difficult to perform detection with only one of the peaks when the peak separation is performed by curve fitting of the Raman spectrum.

### <L2/L1: 0.30 or less>

The voids 7 are inevitably formed at the interface F2 between the titanium substrate 2 and the surface layer 4. When there are many regions in which the voids 7 are formed, cracks or the like occur when the surface-treated titanium material 1 is subjected to the press molding, and a corrosive acidic solution enters an inside of the voids 7, and thus corrosion occurs in the interface F2, and the conductivity of the separator deteriorates.

In the present embodiment, an arbitrary cross section is observed at a magnification of, for example, 300,000 times using the FE-SEM, and a ratio of the regions in which the voids 7 are formed is appropriately defined. In a case where an arbitrary cross section is observed with the FE-SEM, a ratio of the regions in which the voids 7 are formed can be expressed by L2/L1 when a length of the interface F2 between the surface layer 4 and the titanium substrate 2 in the observation region is defined as L1 and a length of the voids 7 exist in the interface is defined as L2.

When L2/L1 exceeds 0.30, cracks are formed in the titanium oxide layer 5 when press molding is performed. Thereafter, when the obtained fuel cell separator is used, the corrosive acidic solution enters the voids 7 through the cracks, and the corrosive acidic solution spreads to the interface F2, thereby accelerating the corrosion of the passive film 3 and/or the metallic titanium layer 2a adjacent to the passive film 3.

Therefore, L2/L1 is preferably 0.30 or less. When no void 7 is observed in an arbitrary cross section observed with the FE-SEM, L2 is considered to be zero, and thus L2/L1 is zero.

A method for calculating a ratio of void regions will be described in detail with reference to Fig. 2. As described above, the film thickness T is calculated using a cross-sectional photograph of a region where a ratio of the thickness of the titanium oxide layer 5 is the largest, and similarly to the method for measuring the film thickness T, the ratio of the void regions is calculated using a cross-sectional photograph of a region having the largest ratio of color in the observation of the surface. The method for calculating the ratio of the void regions will be described below with reference to Fig. 2.

The void 7 has, for example, an elliptical shape extending in a horizontal direction, and an interface between the void 7 and the metallic titanium layer 2a has a contrast of a black linear shape (interface F2 between the passive film 3 and the titanium oxide layer 5). The interface is not a straight line and is undulated, but is assumed to be a straight line and a length of the void is measured based on an image.

In Fig. 2, lengths (B1, B2, B3, B4, and B5) of voids at five portions are measured, and these lengths are summed to calculate L2 (B1+B2+B3+B4+B5), and a width of the image is defined as the length L1 of the interface, whereby L2/L1 can be calculated.

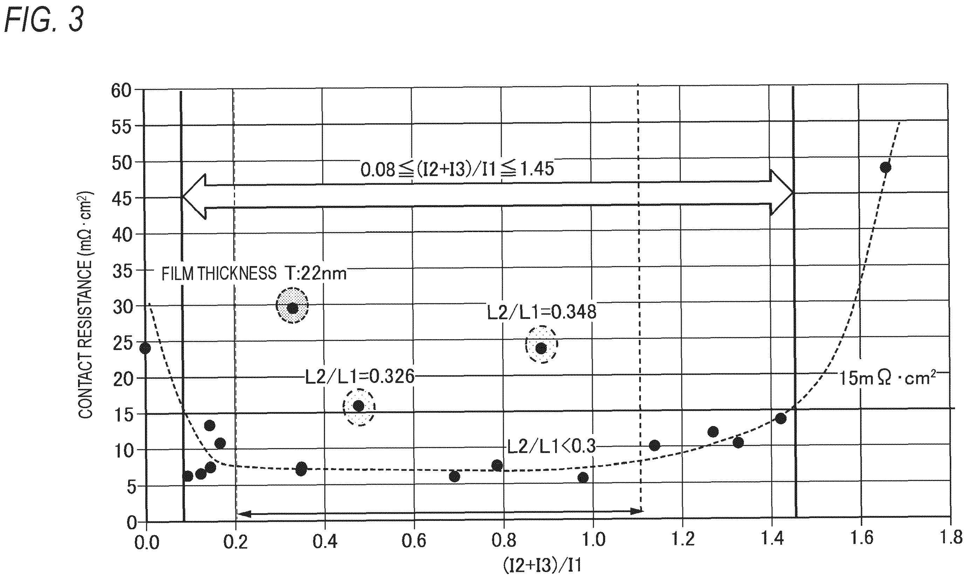

Fig. 3 is a graph illustrating a relation between (I2+I3)/I1 and contact resistance when the horizontal axis represents (I2+I3)/I1 and the vertical axis represents the contact resistance. For example, when the contact resistance is 15 mΩ·cm² or less, it can be determined that the conductivity is excellent.

As illustrated in Fig. 3, the contact resistance is lower in a range, represented between two thick solid lines parallel to the vertical axis, in which (I2+I3)/I1 is 0.08 or more and 1.45 or less, as compared with that in other ranges. In particular, the contact resistance is further lowered in a range, represented between two broken lines parallel to the vertical axis, in which (I2+I3)/I1 is 0.1 or more and 1.1 or less.

However, even when a value of (I2+I3)/I1 is within a range of the present invention, the contact resistance may exceed 15 mΩ·cm². This is because the contact resistance increases due to that the total film thickness T of the titanium oxide layer and the passive film is less than 25 nm, or that L2/L1 is 0.30 or more.

### (Type of Carbon Particles)

In the present embodiment, as the carbon particles 6, particles composed of carbon, or particles obtained by doping B, N, or the like into the particles composed of carbon can be used. Examples of the carbon particles 6 include carbon black, graphite, B-doped diamond particles, and N-doped diamond particles. The carbon particles may use one of the examples alone or a combination of two or more thereof. The carbon black is a carbon particle having a chain structure consisting of amorphous carbon. The carbon black is classified into furnace black, acetylene black, thermal black, or the like depending on the manufacturing method thereof, and any of those can be used. Examples of the graphite include artificial graphite and natural graphite.

### (Average Particle Diameter of Carbon Particles)

An average particle diameter of the carbon particles 6 to be used is preferably 120 nm or less in terms of a median diameter (particle diameter at which a cumulative distribution reaches 50%: hereinafter, referred to as D50) based on a volume of aggregated carbon particles. When the average particle diameter of the carbon particles 6 is 120 nm or less, a ratio of small carbon particles 6 which are equal to or less than the thickness of the titanium oxide layer 5 increases, and thus an amount of the carbon particles incorporated into the titanium oxide layer increases. As a result, the number of conductive paths increases, and high conductivity can be obtained. The particle diameter (D50) of the carbon particles 6 is more preferably 70 nm or less.

### (Content of Carbon Particles in Titanium Oxide Layer)

By controlling the content of the carbon particles in the titanium oxide layer 5, a fuel cell separator having excellent conductivity can be obtained. When the content of the carbon particles in the titanium oxide layer 5 is 20% or more, excellent conductivity can be obtained. Therefore, the content of the carbon particles in the titanium oxide layer 5 is preferably 20% or more, and more preferably 25% or more.

### (Method for Measuring Content of Carbon Particles in Titanium Oxide Layer)

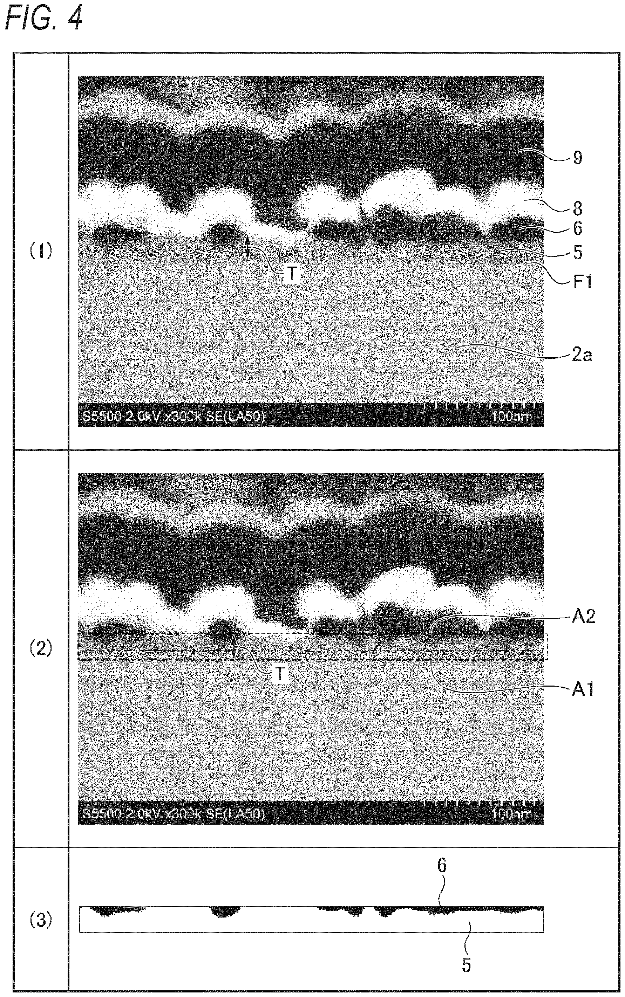

(1), (2), and (3) of Fig. 4 are views illustrating a method for measuring the content of the carbon particles in the titanium oxide layer.

In the present embodiment, the content of the carbon particles is calculated based on a backscattered electron image of a cross section of the surface layer, which is captured using an FE-SEM under conditions of an acceleration voltage of 2.0 keV and a magnification of 300,000 times. Specifically, the content can be obtained by determining a ratio of (Sc/(St+Sc)), when an area occupied by the carbon particles 6 incorporated into the inside of the titanium oxide layer 5 is defined as Sc and a total cross-sectional area of the titanium oxide layer 5 and the passive film 3 is defined as St.

The method for measuring the content of the carbon particles will be described in more detail with reference to (1), (2), and (3) of Fig. 4.

First, as illustrated in (1) of Fig. 4, an arbitrary position of the surface-treated titanium material 1 to be measured is subjected to the cross-section processing using a CP, and the cross section is captured by an FE-SEM. Then, a portion where the interface F1 between the passive film 3 and the metallic titanium layer 2a is as straight as possible is selected.

Next, as illustrated in (2) of Fig. 4, a straight line A1 is drawn at the above-mentioned interface, and a straight line A2 parallel to the interface is drawn at a position above the interface by the film thickness T obtained by the above-described method.

Thereafter, as illustrated in (3) of Fig. 4, an image of a region between the straight line A1 and the straight line A2 is binarized to color the carbon particles 6 black and color the titanium oxide layer 5 white. In this case, the carbon particles in a portion protruding from the surface of the titanium oxide layer 5 are not included in Sc.

Then, the number of black dots, which is a value proportional to Sc, and the number of dots in a region between the straight line A1 and the straight line A2, which is a value proportional to St+Sc, are measured, and Sc/(St+Sc) is calculated. Since the voids are also colored black at the time of binarization, the void portion is assumed to be a white dot to obtain the Sc.

### [Method for Manufacturing Surface-treated Titanium Material for Fuel Cell Separator]

A method for manufacturing a surface-treated titanium material for a fuel cell separator according to the present embodiment includes: a step of annealing a titanium substrate; a step of coating a surface of the annealed titanium substrate with carbon particles; an oxidation treatment step of thermally treating the titanium substrate coated with the carbon particles in an oxidizing atmosphere to form a titanium oxide layer including the carbon particles; a washing step of removing carbon particles not adhering tightly to the titanium oxide layer from a surface of the titanium oxide layer; and a reduction treatment step of heat-treating the titanium substrate having the titanium oxide layer formed thereon in vacuum or in an inert gas atmosphere to form a surface layer.

The manufacturing method will be described in detail below.

### <Substrate>

As the titanium substrate 2, a rolled titanium foil can be used.

### (Average Carbon Concentration on Surface of Substrate)

An average carbon concentration from the outermost surface of the titanium substrate 2 to a position at a depth of 50 nm is preferably 10 atom% or less, and more preferably 7 atom% or less. As for carbon on the surface, titanium abrasion powder generated by rolling reacts with a lubricant to become Ti(C,O) having substantially the same composition of oxygen and carbon, and is embedded in a titanium surface. This Ti(C,O) is thermally decomposed in the following annealing step, and C is spread in titanium through solid solution diffusion, but when an amount of Ti(C,O) after the rolling is large, a large amount of Ti(C,O) that cannot be completely decomposed remains.

A titanium oxide layer is hardly formed on Ti(C,O) in an oxidation treatment step to be described later. In addition, Ti(C,O) itself has conductivity, but since Ti(C,O) easily corrodes in an acidic corrosive environment in the fuel cell to become titanium oxide, when a large amount of Ti(C, O) that cannot be completely decomposed remains, the contact resistance increases. The remaining Ti(C,O) that is not decomposed even after the annealing increases together with the average carbon concentration.

When the average carbon concentration from the outermost surface of the titanium substrate 2 to the position at a depth of 50 nm is 10 atom% or less, the amount of Ti(C,O) that cannot be completely decomposed is reduced, and an increase in contact resistance can be avoided. Therefore, the average carbon concentration is preferably 10 atom% or less, and more preferably 7 atom% or less.

### (Method for Measuring Average Carbon Concentration on Surface of Substrate)

A method for measuring the average carbon concentration from the outermost surface of the titanium substrate 2 to the position at a depth of 50 nm will be described below.

The carbon concentration from the outermost surface of the titanium substrate 2 to the position at a depth of 50 nm can be measured, for example, by performing composition analysis in a depth direction using an X-ray photoelectron spectroscopy (XPS). For example, in the XPS device, by causing Ar ions to collide against the surface of the titanium substrate at an acceleration voltage of 1 kV, the surface of the titanium substrate is etched in the depth direction at a depth in units of 0.5 nm to several nm, and the carbon concentration at the depth is measured. Thereafter, similarly, the operation of etching the surface of the titanium substrate at a depth in units of 0.5 nm to several nm and measuring the carbon concentration is repeated until an etching depth reaches 50 nm. By these operations, the carbon concentration at each depth from the surface is obtained. Then, measurement points are plotted when the horizontal axis represents an analysis depth and the vertical axis represents the carbon concentration, an area of a portion up to 50 nm surrounded by a polygonal line obtained by connecting respective points in order by a straight line and the horizontal axis is obtained, and the area is divided by 50 nm, thereby calculating the average carbon concentration up to 50 nm.

In general, carbon resulting from adsorption of an organic substance or the like existing in an atmosphere is detected from a surface layer of the titanium substrate 2. In the present description, in measurement of the carbon concentration, a portion excluding a surface layer portion (contaminated layer) of the titanium substrate 2 to which the organic substance or the like is adsorbed corresponds to the "outermost surface". Therefore, the above-mentioned 50 nm indicates a value from the outermost surface as defined above to a depth of 50 nm. In addition, an analysis area is desirably an area of a circle having a diameter of 100 µm or more. The reason is that, since Ti(C,O) has a size of sub µm to several µm, when an average value of the carbon concentration on the surface of the titanium substrate is to be obtained, it is necessary to measure a region far larger than that of Ti(C,O).

### <Annealing Step of Substrate>

The manufacturing method according to the present embodiment includes a step of annealing the titanium substrate. In the following step, the surface of the titanium substrate is variously changed, and for example, a coating layer obtained by applying carbon particles or a titanium oxide layer is formed, but in the following description, for convenience, the titanium substrate, including a layer formed on the surface, may be referred to as a titanium foil.

In order to enable press molding of narrow grooves, it is necessary to perform annealing on the titanium substrate 2 hardened by the rolling to soften the titanium substrate 2, that is, to reduce 0.2% yield strength of the titanium substrate 2. When the 0.2% yield strength of the titanium substrate 2 is high, spring back after the press molding becomes large, and the separator may warp or may not have a desired groove shape, which makes it difficult to assemble a fuel cell. Since the titanium substrate has anisotropy, the 0.2% yield strength differs between a longitudinal direction (referred to as an L direction) and a width direction (referred to as a T direction) of a coil. In order to enable the pressing of the narrow grooves, the 0.2% yield strength in the L direction is preferably 110 MPa to 150 MPa, and the 0.2% yield strength in the T direction is preferably 180 MPa to 215 MPa.

When the 0.2% yield strength is too low, the titanium foil may be broken by the press molding. Therefore, for example, a temperature of the rolled titanium foil is raised to 700°C to 850°C, and the annealing is performed for about 20 seconds to 40 seconds. Although depending on a Fe concentration of titanium impurities that lowers a β phase precipitation temperature, by performing the annealing at 850°C or lower, it is possible to avoid a β phase from precipitating at a grain boundary and to improve press moldability. That is, it is preferable to select a temperature and a time at which the β phase does not precipitate.

On the other hand, the annealing is possible even at 700°C or lower, but when the temperature is low, a treatment time is preferably increased. In addition, when the carbon concentration of the surface of the rolled titanium foil is high, by increasing an annealing temperature and the treatment time, Ti(C,O) can be decomposed, C can diffuse into the titanium substrate, and an amount of the remaining Ti(C,O) can be reduced. In this way, annealing conditions can be appropriately changed in accordance with the carbon concentration of the surface within a range of annealing conditions in which the titanium foil is softened and the press molding is not affected.

### <Coating Step of Carbon Particles>

The manufacturing method according to the present embodiment includes a step of coating the surface of the annealed titanium substrate 2 with carbon particles.

The carbon particles 6 can be applied on the titanium substrate 2 in a form of an aqueous or oleaginous dispersion liquid (also referred to as a dispersion coating material) in which the carbon particles 6 are dispersed. In addition, the carbon particles 6 may be directly applied onto the titanium substrate 2.

The dispersion coating material containing the carbon particles 6 may contain a binder resin and/or a surfactant. However, since the binder resin or the surfactant tend to decrease the conductivity, contents thereof are preferably as small as possible. In addition, the dispersion coating material may contain other additives as necessary.

As the binder resin, it is preferable to use a resin that is decomposed without residue by being heated in the oxidation treatment step. Examples of such a binder resin include an acrylic resin, a polyethylene resin, a polypropylene resin, a polystyrene resin, and a polyvinyl alcohol resin. Among these, the acrylic resin is preferable from a viewpoint that the lower a decomposition temperature, the less an effect on formation of the surface layer. The binder resin may use one of the examples alone or a combination of two or more thereof.

A blending ratio of the carbon particles 6 and the binder resin in the dispersion coating material is preferably 0.3 to 2.5 as (solid content of binder resin/solid content of carbon particles) in a solid content mass ratio. As the mass ratio decreases, the amount of the carbon particles 6 increases, and as a result, the conductivity is improved. Therefore, from a viewpoint of conductivity, the mass ratio is preferably 2.5 or less, and more preferably 2.3 or less. On the other hand, as the mass ratio increases, the amount of the binder resin increases. Therefore, when the mass ratio is large, adhesion between the titanium substrate 2 and a coating film is increased. Therefore, from a viewpoint of adhesion, the mass ratio is preferably 0.3 or more, and more preferably 0.4 or more.

As an aqueous medium, for example, water or ethanol can be used. As an oleaginous medium, for example, toluene or cyclohexanone can be used.

As described above, the average particle diameter of the carbon particles 6 is preferably 120 nm or less. Since the carbon particles 6 tend to easily form aggregates in a coating material, it is preferable to use a coating material designed not to form aggregates. For example, as the carbon particles 6, it is preferable to use carbon black in which dispersibility is enhanced by chemically bonding functional groups such as a carboxyl group to the surface to enhance repulsion between the particles.

An applying amount of only the carbon particles 6 on the surface of the titanium substrate 2, subtracting a binder resin component, is preferably 10 µg/cm² or more, and more preferably 30 µg/cm² or more from the viewpoint of conductivity. The applying amount of the carbon particles 6 is preferably 60 µg/cm² or less. Even when the applying amount of the carbon particles 6 is larger than this, an effect of improving the conductivity tends to be saturated.

Examples of a method for applying the dispersion liquid in which the carbon particles 6 are dispersed to the titanium substrate 2 include, but are not limited to, a method using brush coating, a bar coater, a roll coater, a gravure coater, a die coater, a dip coater, or a spray coater. In addition, examples of a method for applying the carbon particles in a form of powder include a method in which a toner prepared using the carbon particles 6 is used, and the titanium substrate 2 is subjected to electrostatic coating with the toner.

### <Oxidation Treatment Step>

The manufacturing method according to the present embodiment includes an oxidation treatment step of thermally treating the titanium substrate 2 coated with the carbon particles in an oxidizing atmosphere to form the titanium oxide layer 5 containing the carbon particles 6.

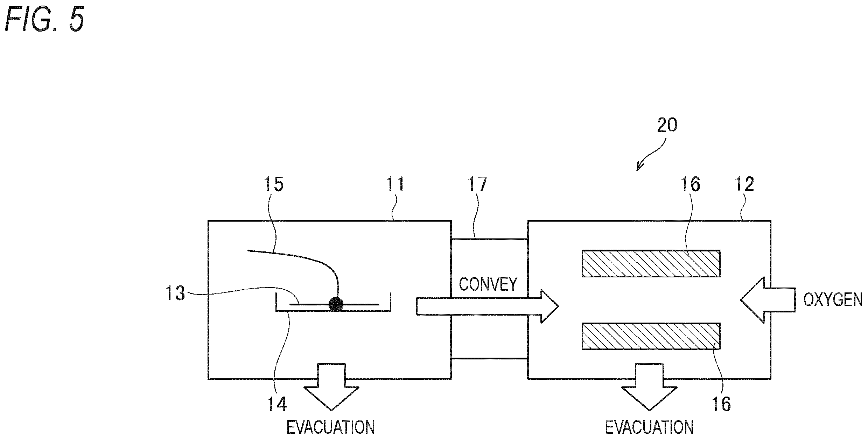

Fig. 5 is a schematic view illustrating a vacuum chamber used for the oxidation treatment. As illustrated in Fig. 5, a vacuum chamber 20 is constituted by a sample chamber 11, a heating chamber 12, and a conveyance passage 17 communicating the sample chamber 11 with the heating chamber 12.

A tray 14 for holding a titanium foil 13 (titanium substrate 2 coated with carbon particles 6) is disposed in the sample chamber 11. In addition, in the heating chamber 12, two flat plate carbon heaters 16 of 20 cm × 40 cm are disposed in parallel in a state of being separated by 7 cm.

The titanium foil 13 is placed on the tray 14 and mounted in the sample chamber 11 of the vacuum chamber 20 constituted as described above, and the vacuum chamber 20 is subjected to vacuum drawing. Next, the carbon heater 16 is heated to a predetermined temperature, oxygen is introduced into the vacuum chamber 20, and an inside of the vacuum chamber 20 is set to a predetermined pressure.

Thereafter, the tray 14 is conveyed from the sample chamber 11 to the heating chamber 12, heated for a predetermined time, and then returned to the sample chamber 11 to be allowed to cool. Thus, a titanium oxide layer 5 is formed.

An oxygen partial pressure during the oxidation treatment is preferably 10 Pa to 100 Pa. By setting the oxygen partial pressure to 10 Pa or more, a diffusion rate of titanium ions can be made appropriate when the titanium ions diffuse outward from the titanium substrate 2 to the titanium surface and are bonded to oxygen in the atmosphere to form the titanium oxide layer. As a result, it is possible to form a surface layer 4 having such a thickness that carbon particles serving as a conductive path are sufficiently incorporated therein.

In addition, by setting the oxygen partial pressure to 100 Pa or less, significant wear due to acceleration of combustion of the carbon particles can be avoided. Further, an increase in rate when oxygen diffuses inward into the titanium substrate 2 can be avoided, and formation of the titanium oxide layer 5 from an original surface of the titanium substrate 2 toward a titanium substrate 2 side can be prevented, so that good conductivity can be obtained.

When the carbon concentration of the surface of the titanium substrate 2 before the oxidation treatment is high, in order to improve corrosion resistance, a surface layer having a high carbon concentration may be dissolved and removed by pickling after annealing. In a case where such pickling is performed, a surface layer having a sufficient thickness is formed when an oxygen pressure is 1 Pa or more. The reason why a lower limit of the oxygen pressure at which a surface layer 4 having a sufficient thickness is formed, due to the outward diffusion of the titanium ions, varies is unclear, but it is considered that a difference in structure between the passive film on the surface of the titanium substrate 2 formed in the annealing step and the passive film formed after the pickling affects the diffusion rate in the passive film of the titanium ions that pass through the passive film from the titanium substrate 2 and are diffused outward to the surface.

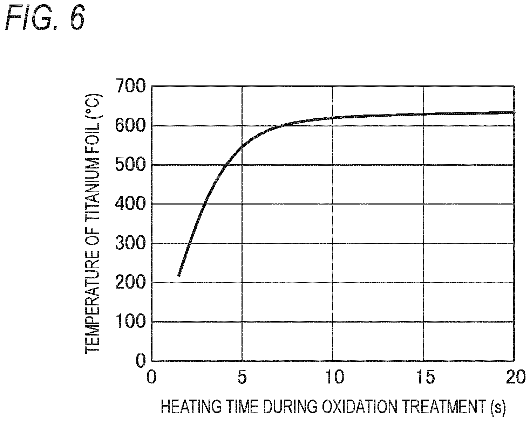

Fig. 6 is a graph illustrating an example of a relation between a heating temperature in the oxidation treatment step and a temperature of the titanium foil, when the horizontal axis represents a heating time and the vertical axis represents the temperature of the titanium foil. Conditions of the oxidation treatment illustrated in Fig. 6 include that a set temperature of the carbon heater 16 is 615°C, an applying amount of the carbon particles is 60 µg/cm², and the oxygen partial pressure is 20 Pa.

As illustrated in Fig. 6, when the titanium foil 13 is conveyed to between the heated two carbon heaters 16, the titanium foil 13 is heated and the temperature thereof rises to reach a constant temperature. In Fig. 6, measurement was performed by inserting the titanium foil 13 on which a thermocouple 15 was spot welded to between the heated carbon heaters 16.

In order to form a desired titanium oxide layer 5, it is preferable to set a temperature rising rate and an attained temperature of the titanium foil 13, and a treatment time from carrying the titanium foil 13 into the heating chamber 12 to carrying the titanium foil 13 out therefrom. The temperature rising rate can be determined by a heater set temperature, the heater, and an emissivity of the titanium foil coated with the carbon particles, and the attained temperature can be determined by the heater set temperature and the treatment time.

When the applying amount of the carbon particles 6 onto the surface of the titanium substrate 2 is changed, the emissivity of the titanium foil 13 is changed, and the temperature rising rate is changed. In addition, when the type of the carbon particles 6 is changed, emissivity of the carbon particles 6 themselves is changed, and thus the temperature rising rate is changed. Further, when a material of the heater is changed, the emissivity of the heater, that is, a rate of heat release from the heater is changed, and thus the temperature rising rate is changed. As described above, since the temperature rising rate changes depending on various factors, although not determined uniquely, for example, in a case where the carbon heater is used, when the applying amount of the carbon particles 6 is 30 µg/cm² or more and the carbon particles 6 are carbon black, it is preferable to set the treatment time to 7 seconds to 20 seconds and the attained temperature of the titanium substrate 2 to about 560°C to 640°C.

### <Washing Step>

The manufacturing method according to the present embodiment includes a washing step of removing carbon particles 6 not adhering tightly to the titanium oxide layer 5 from the surface of the titanium oxide layer 5.

In the coating layer obtained by coating the surface of the titanium substrate 2 with the carbon particles 6, only carbon particles 6 having a maximum particle diameter of about 100 nm are incorporated into the titanium oxide layer 5 from an interface between the titanium substrate 2 and the coating layer, or adhere tightly to the surface of the titanium oxide layer 5. Therefore, it is necessary to remove the carbon particles 6 not adhering tightly to the titanium oxide layer 5 from the surface of the titanium oxide layer 5. When the carbon particles 6 which does not adhere tightly to the titanium oxide layer 5 are not removed by washing, the carbon particles 6 may fall off due to press molding and adhere to a mold, and a pressing flaw may occur on the titanium foil 13 (titanium substrate 2 on which titanium oxide layer 5 is formed) to break the titanium foil 13. As the washing method, any method may be used as long as it is a method of removing excess carbon particles 6, such as a method of washing with water using a brush or a method of removing carbon particles by ultrasonic washing.

In the washing step, when at least the carbon particles 6 not adhering tightly to the surface of the titanium oxide layer 5 are removed, there is no adverse effect in the subsequent steps. Therefore, the carbon particles 6 adhering tightly to the surface of the titanium oxide layer 5 may be completely removed, or may partially remain adhering tightly to the surface.

### <Reduction Treatment Step>

The manufacturing method according to the present embodiment includes a reduction treatment step of heat-treating the titanium substrate 2 having the titanium oxide layer 5 formed thereon in vacuum or in an inert gas atmosphere to form the surface layer 4.

In the reduction treatment step, the vacuum chamber 20 used in the oxidation treatment step can be used.

First, the titanium foil 13 (titanium substrate 2 after washing) is placed on the tray 14, mounted in the sample chamber 11, and after vacuum drawing is performed, the carbon heater 16 is heated to a predetermined temperature. At the time of vacuum drawing, when oxygen supplying molecules such as H₂O, O₂, CO, and CO₂ adsorbed on a wall surface of the vacuum chamber 20 are released, and a certain amount or more of the oxygen supplying molecules exist in the atmosphere in the vacuum chamber 20, the reduction treatment does not proceed. Therefore, a degree of vacuum in the vacuum chamber 20 is preferably less than 0.1 Pa, and more preferably 0.05 Pa or less.

The reduction treatment may be performed by introducing an inert gas such as Ar into the vacuum chamber 20, and increasing a pressure in the vacuum chamber 20 to 0.1 Pa or more. In this case, it is preferable to perform the vacuum drawing until the pressure becomes less than 0.1 Pa before introducing Ar into the vacuum chamber 20.

Thereafter, in the heating chamber 12, the titanium foil 13 is conveyed to between the two carbon heaters 16 heated to a predetermined temperature, heated for a predetermined time, and then returned to the sample chamber 11. Thus, the reduction treatment is performed and a desired surface layer 4 is formed.

As described above, by performing the reduction treatment step after the oxidation treatment step, the oxygen of the titanium oxide (TiO₂) having a rutile structure or an anatase structure formed in the oxidation treatment step can be diffused and absorbed into the titanium substrate to generate Ti₂O₃. As a result, a titanium oxide layer 5 containing Ti₂O₃ and TiO₂ at a desired ratio can be formed, and thus a surface layer 4 which is easily plastically deformed can be obtained.

As the conditions of the reduction treatment, it is preferable to appropriately set the temperature rising rate and the attained temperature of the titanium foil 13, and the treatment time from carrying the titanium foil 13 into the heating chamber 12 to carrying the titanium foil 13 out therefrom, in accordance with the conditions of the oxidation treatment, that is, an amount of titanium oxide formed by the oxidation treatment.

When the titanium oxide layer 5 is grown thick in the oxidation treatment step, unless an amount of oxygen in the titanium oxide layer 5 or the passive film 3 diffused into the metallic titanium layer 2a is increased by the reduction treatment, a formation amount of Ti₂O₃ is reduced, and adhesion between the surface layer 4 and the titanium substrate 2 and toughness cannot be obtained.

On the other hand, when the titanium oxide layer 5 is thin, unless the amount of oxygen in the titanium oxide layer 5 or the passive film 3 diffused into the metallic titanium layer 2a is reduced, Ti₂O₃ is excessively generated, and corrosion of the interface, that is, an increase in resistance is likely to occur.

When the temperature rising rate is low, that is, the emissivity of the heater is low, it takes time to increase the temperature of the titanium foil 13, and thus it is preferable to increase the treatment time.

On the other hand, when the temperature rising rate is fast, it is preferable to shorten the treatment time, but since the temperature rising time is kept substantially constant when the material of the heater is fixed, the attained temperature and the treatment time may be set as the conditions of the reduction treatment.

Further, even if the thickness of the titanium oxide layer is constant, when the reduction treatment is performed under a condition of a long reduction treatment time and/or under a condition of a high attained temperature, corrosion of the interface due to excessive reduction occurs, and the resistance of the fuel cell separator increases.

On the other hand, even if the thickness of the titanium oxide layer is constant, when the reduction treatment is performed under a condition of a short reduction treatment time and/or under a condition of a low attained temperature, the adhesion of the surface layer is insufficient or toughness is insufficient due to underreduction.

As described above, since the conditions of the reduction treatment vary depending on various factors, although not determined uniquely, in a case where strong oxidation (high temperature or long-time treatment) is performed, reduction is difficult to occur, and thus the conditions of the reduction treatment are preferred to be strengthened accordingly.

On the other hand, when weak oxidation is performed, reduction is likely to occur, and thus the conditions of the reduction treatment are preferred to be weakened.

For example, in the oxidation treatment step, when the attained temperature of the titanium foil 13 is set to a high temperature region of 620°C to 635°C, the attained temperature of the titanium foil 13 in the reduction treatment step is preferably set to a temperature region of 525°C to 610°C. In addition, in the oxidation treatment step, when the attained temperature of the titanium foil 13 is set to a low temperature region of 555°C to less than 595°C, the attained temperature of the titanium foil 13 in the reduction treatment step is preferably set to a temperature region of 510°C to 600°C. Further, in the oxidation treatment step, when the attained temperature of the titanium foil 13 is set to an intermediate temperature region of 595°C to less than 620°C, the attained temperature of the titanium foil 13 in the reduction treatment step is preferably set to a temperature region of 515°C to 610°C. With this setting, a desired resistance value can be obtained.

In addition, in both the oxidation treatment step and the reduction treatment step, other than the carbon heater 16, any heater can be used as long as the heater can heat the titanium foil 13 and is not oxidized and consumed in an oxidizing atmosphere, such as a sheath heater. However, since the emissivity varies depending on the material of the heater, it is preferable to optimize the treatment time.

### [Another Method for Manufacturing Surface-treated Titanium Material for Fuel Cell Separator]

In the manufacturing method according to the above-mentioned embodiment, manufacturing steps have been described in an order of the annealing step, the step of coating with carbon particles, the oxidation treatment step, the washing step, and the reduction treatment step, but the manufacturing steps may be performed in an order of the annealing step, the step of coating with carbon particles, the oxidation treatment step, the reduction treatment step, and the washing step, with the washing step being the last step.

That is, another method for manufacturing the surface-treated titanium material for a fuel cell separator according to the present embodiment includes: a step of annealing a titanium substrate; a step of coating a surface of the annealed titanium substrate with carbon particles; an oxidation treatment step of thermally treating the titanium substrate coated with the carbon particles in an oxidizing atmosphere to form a titanium oxide layer including the carbon particles; a reduction treatment step of heat-treating the titanium substrate having the titanium oxide layer formed thereon in vacuum or in an inert gas atmosphere to form a surface layer; and a washing step of removing carbon particles not adhering tightly to the titanium oxide layer from the surface of the titanium oxide layer.

However, in this case, in the reduction treatment step, since excess carbon particles 6 adhere to the surface of the titanium foil 13, the emissivity of the surface increases. As a result, when the reduction treatment is performed under the same heating conditions as those in the case where the reduction treatment is performed after the washing step, the temperature of the titanium foil 13 increases rapidly. Therefore, in the case where the washing step is performed after the reduction treatment step, a heater temperature in the reduction treatment step is preferably set to be lower.

### EXAMPLES

Hereinafter, Examples and Comparative Examples of the surface-treated titanium material for a fuel cell separator manufactured by the manufacturing method according to the present embodiment will be described.

A surface-treated titanium material was manufactured by various manufacturing methods to be described below, and an effect of manufacturing conditions and the like on performance of the obtained surface-treated titanium material was investigated.

### [Test 1. Effect of Ti₂O₃/TiO₂ Ratio and Void Ratio on Performance]

Surface-treated titanium materials were manufactured by variously changing a Ti₂O₃/TiO₂ ratio of ((I2+I3)/I1) and a void ratio of (L2/L1). Detailed manufacturing conditions, measurement conditions, and the like are as follows.

### <Manufacturing of Surface-treated Titanium Material>

### (Preparation of Titanium Substrate and Carbon Analysis)

A titanium foil coil 26 having a width of 48 cm and rolled to a thickness of 0.1 mm was prepared, and a surface of a titanium foil 26a was subjected to composition analysis in the depth direction by an XPS. An average concentration of carbon at a depth of about 50 nm excluding the outermost surface of the titanium foil 26a was 3.9 atom%.

### (Annealing Step)

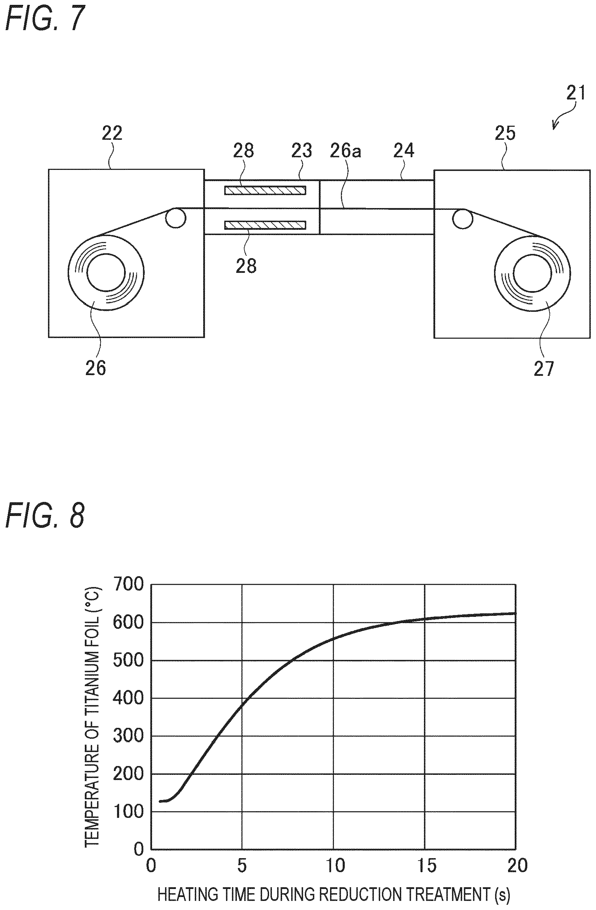

In the present Examples, a titanium substrate was annealed using a continuous annealing furnace 21 illustrated in Fig. 7. As illustrated in Fig. 7, the continuous annealing furnace 21 includes a first chamber 22, a second chamber 23, a third chamber 24, and a fourth chamber 25. The continuous annealing furnace 21 is implemented such that unwinding of a coil can be performed in the first chamber 22, heating by a carbon heater 28 can be performed in the second chamber 23, cooling can be performed in the third chamber 24, and winding of the coil can be performed in the fourth chamber 25.

Using the continuous annealing furnace 21 implemented as described above, first, the titanium foil coil 26 was installed in the first chamber 22 and was subjected to vacuum drawing, and then the carbon heater 28 was heated to raise the heater temperature to 810°C. Next, Ar gas was introduced into the continuous annealing furnace 21 and a pressure in the furnace is set to about 2 Pa. Thereafter, a line speed was set such that a time for heating by the carbon heater 28 was 35 seconds, and the titanium foil 26a unwound from the titanium foil coil 26 was conveyed into the second chamber 23 and heated. Thereafter, the titanium foil 26a was conveyed to the third chamber 24, cooled in the furnace by radiation cooling or the like, wound inside the fourth chamber 25, and again formed into a titanium foil coil 27.

### (Coating Step with Carbon Particles)

A titanium foil having a size of about 10 cm × 20 cm was cut out from the annealed titanium foil coil 27, coated with a coating material containing carbon black on the surface of the titanium foil using a bar coater, and then dried using a dryer to form a coating film containing carbon black on the surface of the titanium foil. Similarly, a coating film was formed on a back surface. Carbon black having a particle diameter (D50) of 62 nm was used. In order to enhance the adhesion of the coating material, a coating material in which an acrylic resin was added in a weight ratio of 0.8 relative to the carbon black was used.

In addition, in order to measure an applying weight, a weight was measured for a titanium foil having the same size as that described above whose one surface was coated with the coating material and dried, and thereafter, the coating material was wiped off with a cloth containing ethanol, the weight was measured again, and a weight difference was calculated and divided by a coating area. The applying weight was about 60 µg/cm². Therefore, the applying amount of the carbon black was calculated as 60 ÷ 1.8 ≈ 33 µg/cm².

### (Oxidation Treatment Step)

The oxidation treatment was performed using the vacuum chamber 20 illustrated in Fig. 5. First, the titanium foil 13 coated with the coating material containing carbon black on both surfaces thereof was placed on the tray 14, this was installed in the sample chamber 11, the inside of the vacuum chamber 20 was subjected to vacuum drawing, and then the carbon heater 16 was heated to a predetermined temperature. Thereafter, oxygen was introduced into the vacuum chamber 20 to adjust the pressure in the vacuum chamber 20 to 20 Pa, and then the titanium foil 13 was conveyed to the heating chamber 12 and heated for 17 seconds. Thereafter, the tray 14 was returned to the sample chamber 11 again, and the titanium foil 13 was left to cool to perform the oxidation treatment.

By welding the thermocouple 15 to a center of the titanium foil 13 having the coating film containing carbon black formed on both surfaces thereof and heating the titanium foil 13 in the same manner as in the above-mentioned oxidation treatment step, a temperature change of the thermocouple when the titanium foil 13 is heated can be known. For example, as illustrated in Fig. 6, when the temperature of the carbon heater 16 was set to 615°C, the titanium foil 13 was conveyed to the heated heating chamber 12, and held for 17 seconds, the attained temperature of the titanium foil 13 was about 630°C. In this way, it is considered that the attained temperature of the titanium foil 13 after 17 seconds reaches a temperature about 15°C higher than the set temperature of the carbon heater 16. The reason why the temperature of the thermocouple is higher than the set temperature of the carbon heater 16 is considered to be that, since the thermocouple for measuring the temperature of the carbon heater 16 is installed at an end of the carbon heater 16, a temperature near the center of the carbon heater 16 that actually heats the titanium foil 13 is higher than a set value.

### (Washing Step)

The titanium foil 13 was taken out from the vacuum chamber 20, the surface thereof was rubbed with a cloth impregnated with ethanol, and then the surface was rubbed with a sponge again while applying water thereto and dried, thereby washing and removing excess carbon black not adhering tightly to the surface of the titanium foil 13.

### (Reduction Treatment Step)

The reduction treatment was performed using the vacuum chamber 20 illustrated in Fig. 5. First, the washed titanium foil 13 was again placed on the tray 14 of the vacuum chamber 20 and installed in the sample chamber 11, the inside of the vacuum chamber 20 was subjected to vacuum drawing, and then the carbon heater 16 was heated to a predetermined temperature. The pressure in the vacuum chamber 20 was set to be less than 0.1 Pa which is not affected by oxygen, water vapor, or the like such that the reduction of the titanium oxide formed by the oxidation treatment proceeds. Thereafter, Ar gas was introduced into the vacuum chamber 20 to set a pressure in the furnace to 40 Pa, and then the titanium foil 13 was conveyed to the heating chamber 12 and heated for 12 seconds. Thereafter, the tray 14 was returned to the sample chamber 11 again, and the titanium foil 13 was left to cool to perform the reduction treatment.

Fig. 8 is a graph illustrating an example of a relation between a heating temperature in a reduction treatment step and a temperature of a titanium foil when the horizontal axis represents a heating time and the vertical axis represents the temperature of the titanium foil. In the graph illustrated in Fig. 8, the set temperature of the carbon heater 16 is 615°C, and the partial pressure of Ar gas is 40 Pa. As illustrated in Fig. 8, in the same manner as in the oxidation treatment step, when the washed titanium foil 13 on which the thermocouple 15 was welded was conveyed to the heating chamber 12 in which the temperature of the carbon heater 16 was set to 615°C, and the washed titanium foil 13 was heated for 12 seconds, the attained temperature of the titanium foil 13 was about 585°C. This temperature is about 30°C lower than the set temperature of the carbon heater 16. In this way, it is considered that the attained temperature of the titanium foil 13 after 12 seconds is lower than the set temperature by about 30°C.

### (Preparation of Press-molded Simulated Material)

The titanium foil of which the treatment is finished (surface-treated titanium material) was cut such that a length of one side parallel to a rolling direction of the coil was 65 mm and a width of the other side perpendicular to the rolling direction was 20 mm. Then, on both sides apart from a center line in a length direction by 12.5 mm, reference lines were drawn in parallel with the center line with a marker pen, both ends in the length direction were held by a tensile tester to pull the titanium foil such that a length between the reference lines became 32.5 mm, and thus a press-molded simulated material was prepared under severe conditions with an elongation percentage of 30%.

### <Measurement and Analysis>

### (Measurement of Initial Contact Resistance)

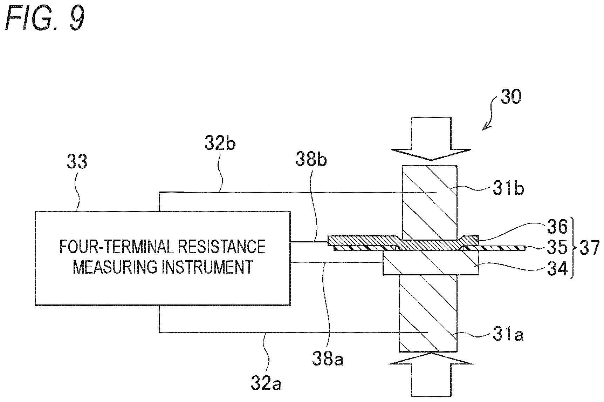

Fig. 9 is a schematic view illustrating a contact resistance measuring instrument. A contact resistance measuring instrument 30 is implemented such that a test material 37 is sandwiched between a pair of cylindrical copper electrodes 31a and 31b, and a four-terminal resistance measuring instrument (manufactured by Tsuruga Electric Corporation: low resistance meter 356E) 33 is connected between one copper electrode 31a and the other copper electrode 31b via current terminals 32a and 32b, respectively. In addition, a load applying device (not illustrated) is attached to the copper electrodes 31a and 31b such that a load can be applied to a test piece in a direction indicated by an arrow.

Using such a contact resistance measuring instrument 30, the initial contact resistance (contact resistance before immersion) of each simulated material was measured.

In the test material 37, a resin sheet 35 having a thickness of 0.05 mm and having a hole with a diameter of 16 mm was stacked in the vicinity of a central portion of a press-molded simulated material 34 described above, and a carbon paper 36 having a width of about 20 mm was stacked on the resin sheet 35. The press-molded simulated material 34 and the carbon paper 36 were stacked so as to cover the hole of the resin sheet 35. Then, the three-layered test material 37 was inserted between the copper electrode 31a and the copper electrode 31b each having a diameter of 14 mm and a tip end area of 1.54 cm², taking care to avoid the resin sheet be sandwiched between the electrodes. Thereafter, the load was set to 15.4 kg and the test material 37 was pressurized with the copper electrode 31a and the copper electrode 31b. Then, a resistance was measured by connecting one current terminal 32 of the four-terminal resistance measuring instrument 33 to the copper electrode 31a, connecting the other current terminal 32 to the copper electrode 31b, and at the same time, connecting one resistance measuring terminal 38a to the press-molded simulated material 34, and connecting the other resistance measuring terminal 38b to the carbon paper 36. Thereafter, the measured resistance value was multiplied by a contact area of 1.54 cm² to calculate the initial contact resistance before immersion.

### (Measurement of Contact Resistance after Immersion)

Contact resistance after the simulated material 34 was immersed in a corrosive acidic solution was measured, assuming that the fuel cell separator was used. As the corrosive acidic solution, an acidic solution obtained by adding NaF and NaCl to ion-exchanged water whose pH was adjusted to 3 by addition of sulfuric acid such that a fluorine ion concentration was 30 ppm and a chlorine ion concentration was 10 ppm was used.

First, the above-mentioned press-molded simulated material 34 was placed in a polyethylene container, immersed in the above-mentioned acidic solution, and covered with a lid, and the container was placed in a thermostatic bath at 80°C and held for four days (96 hours). Thereafter, the container was taken out from the thermostatic bath, the titanium foil was taken out from the container, washed with ion-exchanged water and dried, and the contact resistance after immersion was measured by the same method as the method for measuring the initial contact resistance.

In the present Examples, those having a contact resistance of 15 mΩ·cm² or less were considered acceptable.

### (Measurement of Ti₂O₃/TiO₂ Ratio)

Among resistance measurement portions of the titanium foil before the press-molded simulated material 34 was prepared, a region having an area of 1 cm² was measured over a wave number range of 150 cm⁻¹ to 2,000 cm⁻¹ by Raman spectroscopic analysis. For the Raman spectroscopic analysis, a laser Raman microscope RAMANtouch (manufactured by Nanophoton Corporation) was used. In addition, measurement conditions were set as follows: laser wavelength: 532 nm; laser power: about 500 W/cm²; diffraction grating: 600 gr/mm; and slit width: 50 µm.

Next, a spectrum of 150 cm⁻¹ to 800 cm⁻¹ in which a peak derived from titanium oxide was observed was retrieved, and peak search and peak separation were performed.

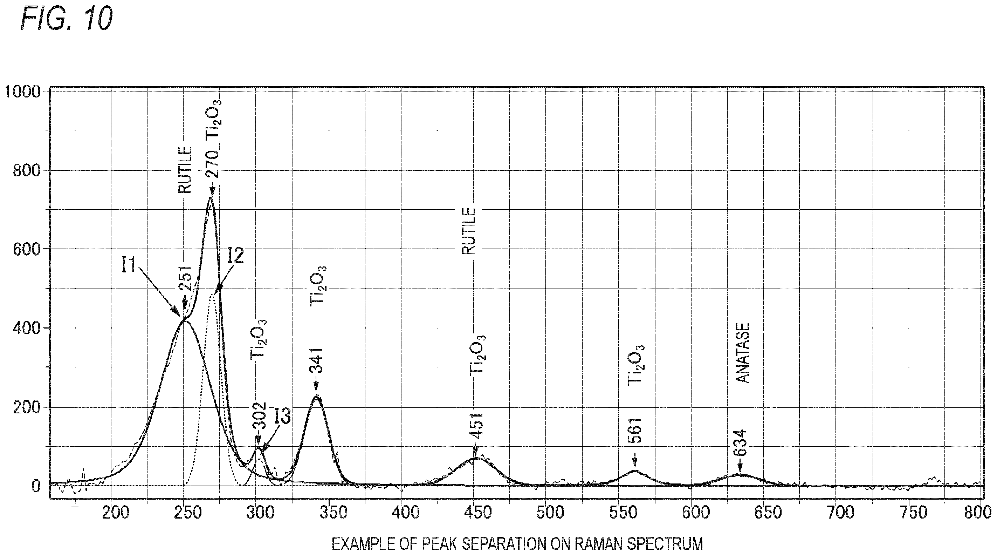

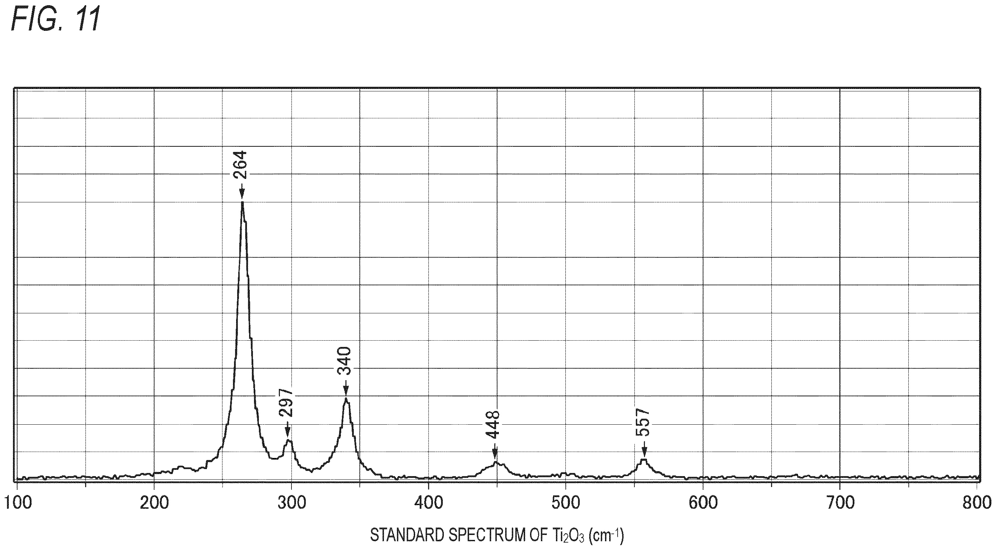

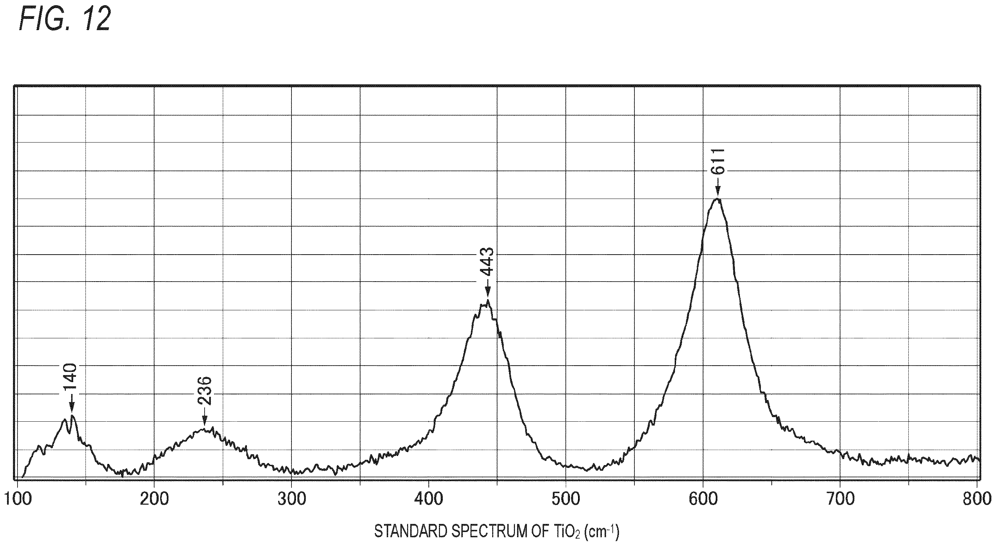

Fig. 10 is a graph illustrating an example of a sample obtained by performing the peak separation on a Raman spectrum. Fig. 11 is a graph illustrating a standard spectrum of Ti₂O₃, and Fig. 12 is a graph illustrating a standard spectrum of TiO₂ (rutile). As illustrated in Fig. 10, detected peaks were peaks derived from TiO₂ of a rutile structure, TiO₂ of an anatase structure, and Ti₂O₃.

The titanium oxide formed in the oxidation treatment step was almost only rutile, but by performing the reduction treatment, TiO₂ in a form of rutile is reduced, and a small amount of TiO₂ of an anatase structure and Ti₂O₃ were formed. As illustrated in Figs. 10 and 12, peaks of the rutile after the reduction treatment remain in the vicinity of 441 cm⁻¹ and in 235 cm⁻¹ to 252 cm⁻¹, and both peaks overlap peaks of Ti₂O₃. It is necessary to separate the peaks to rutile and Ti₂O₃ by peak separation by curve fitting (fitting using a mixed function (Gaussian function + Lorentz function)), but since the peak of the former is difficult to be separated, a peak of 235 cm⁻¹ to 252 cm⁻¹ (peak height I1) after peak separation of the latter was used as the peak of rutile.

On the other hand, as illustrated in Figs. 10 and 11, for the peak of Ti₂O₃, a total peak height of 260 cm⁻¹ to 276 cm⁻¹ (peak height I2) and 292 cm⁻¹ to 303 cm⁻¹ (peak height I3) after the peak separation by curve fitting was used. As an index of a degree of reduction, a ratio of the total peak height (I2+I3) of 260 cm⁻¹ to 276 cm⁻¹ and 292 cm⁻¹ to 303 cm⁻¹ indicating the Ti₂O₃ structure to the peak height (I1) of 235 cm⁻¹ to 252 cm⁻¹ indicating the rutile structure (hereinafter, the ratio of the peak heights may be referred to as "(I2+I3)/I1" or "Ti₂O₃/TiO₂ ratio") was used to examine a relation with the contact resistance after immersion.

### (Measurement of Void Ratio and Film Thickness T)

Among surface-treated titanium materials obtained by variously changing the temperature during the oxidation treatment, the surface of a part of the surface-treated titanium materials was observed with an optical microscope, and a portion with a color having the highest surface ratio was subjected to cross-section processing with a Cross section polisher (CP). Then, a backscattered electron image of the cross section was captured by an FE-SEM (S-5000, manufactured by Hitachi High-Tech Corporation) at an acceleration voltage of 2.0 kV and a magnification of 300,000 times, and the ratio of a length occupied by voids to a length of the interface (void ratio: L2/L1) and the film thickness T were measured.

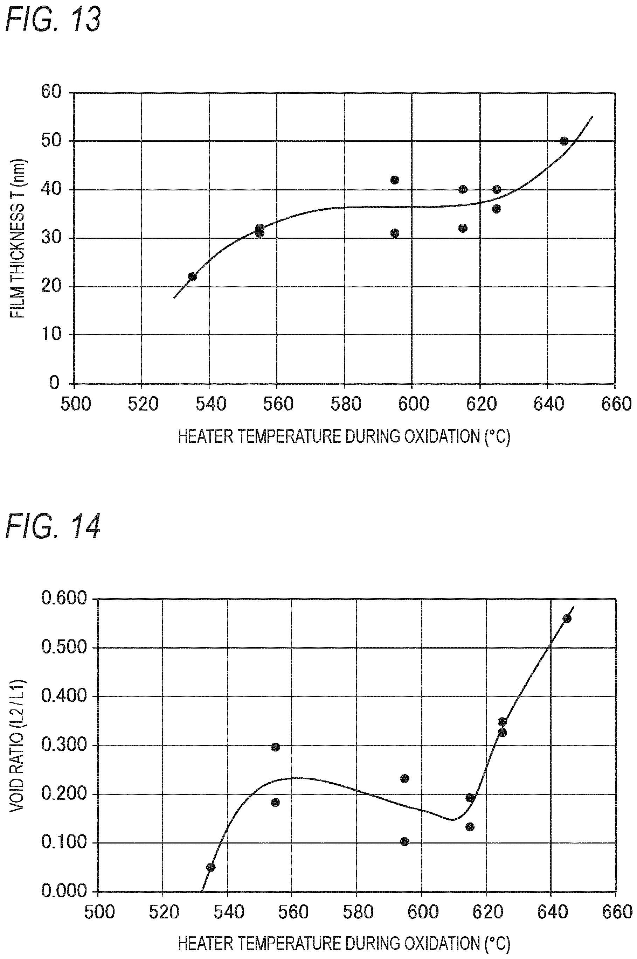

Fig. 13 is a graph illustrating a relation between a heater set temperature and the film thickness when the horizontal axis represents the heater set temperature during the oxidation treatment and the vertical axis represents the film thickness. Fig. 14 is a graph illustrating a relation between the heater set temperature and the void ratio when the horizontal axis represents the heater set temperature during the oxidation treatment and the vertical axis represents the void ratio.

As illustrated in Figs. 13 and 14, when the applying amount of the carbon particles and a time of the oxidation treatment are constant, the film thickness T and the void ratio are substantially determined by the temperature of the oxidation treatment although there is some variation. This is because a process in which the titanium oxide layer is formed is only the oxidation treatment step. Therefore, when a temperature of an oxidation heater, coating conditions, and a treatment time are the same, films having substantially the same film thickness can be obtained although there is some variation.

In addition, the voids are also formed in the oxidation treatment step in which the titanium oxide layer is formed. In a mechanism in which titanium oxide is formed by the oxidation treatment, titanium atoms in the titanium substrate diffuse in the passive film on the surface of the titanium substrate, exit to the surface of the passive film, and react with oxygen in the furnace, thereby forming titanium oxide mainly having a rutile structure. Thereafter, the titanium atoms diffused from the titanium substrate diffuse in the passive film and the titanium oxide mainly composed of rutile formed on the surface thereof, reach the surface, and continue to react with oxygen in the furnace, whereby the titanium oxide layer grows. In this case, the titanium ions (in the titanium oxide layer, titanium takes a form of ions) diffused in the titanium oxide layer appear on the surface of the titanium oxide layer by exchanging a position with pores that exist in a titanium lattice in the titanium oxide layer. In addition, the pores diffuse into an interface between the titanium oxide and the passive film.

Some of the pores diffused in the interface diffuse in the passive film, but some are accumulated in the interface between the titanium oxide and the passive film and grow into voids. Therefore, when a temperature of the oxidation treatment is high or the time of the oxidation treatment is long, a diffusion amount of the pores increases, and thus an amount of pores accumulated in the interface between the titanium oxide and the passive film, that is, voids increase. That is, although there is some variation, formation of the voids is also substantially determined by only the conditions of the oxidation treatment.

Therefore, similarly to the film thickness, a formation amount of the voids can be considered to be substantially the same as long as the temperature and time of the oxidation treatment are the same, although there is some variation. Therefore, one or two test pieces were selected for each heater set temperature during oxidation, the void ratio of (L2/L1) and the film thickness T were measured, and all test pieces treated under the same oxidation conditions were regarded as having substantially the same void ratio and film thickness and measurements thereof were not performed.

Measurement results of temperatures at the time of oxidation treatment and reduction treatment, contact resistances at an initial stage and after immersion for four days, the Ti₂O₃/TiO₂ ratio, the void ratio, and the film thickness T of each test piece are shown in Table 1 below. In Table 1, "-" indicates that measurement was not performed. In addition, in a column of the temperature of oxidation treatment, the estimated temperature of titanium foil was set to 15°C higher than the heater set temperature for oxidation treatment. Further, in a column of the temperature of reduction treatment, the estimated temperature of titanium foil was set to 30°C lower than the heater set temperature for reduction treatment.

[Table 1]

**Table 1**

| No. | | Temperature of oxidation treatment (°C) | | Temperature of reduction treatment (°C) | | Contact resistance (mΩ·cm²) | | Ti₂O₃/TiO₂ ratio (I2+I3)/I1 | Void ratio L2/L 1 | Film thickness T (nm) |
|---|---|---|---|---|---|---|---|---|---|---|
| | | Heater set temperature | Estimated temperature of titanium foil | Heater set temperature | Estimated temperature of titanium foil | Initial stage | After immersion for four days | | | |
| | 1 | 555 | 570 | 545 | 515 | 4.2 | 7.5 | 0.15 | - | - |
| | 2 | 555 | 570 | 565 | 535 | 3.7 | 6.6 | 0.12 | 0.297 | 32 |
| | 3 | 555 | 570 | 575 | 545 | 4.1 | 7.4 | 0.35 | - | - |
| | 4 | 555 | 570 | 605 | 575 | 4.8 | 6 | 0.69 | 0.183 | 31 |
| | 5 | 555 | 570 | 625 | 595 | 3.6 | 13.7 | 1.42 | - | - |
| Ex. | 6 | 575 | 590 | 625 | 595 | 3.8 | 10.1 | 1.14 | - | - |
| | 7 | 595 | 610 | 605 | 575 | 4.6 | 5.7 | 0.98 | - | - |
| | 8 | 595 | 610 | 635 | 605 | 4.9 | 10.4 | 1.33 | 0.232 | 42 |
| | 9 | 615 | 630 | 555 | 525 | 4.4 | 13.3 | 0.14 | - | - |
| | 10 | 615 | 630 | 605 | 575 | 4.1 | 7 | 0.35 | 0.193 | 40 |
| | 11 | 615 | 630 | 625 | 595 | 4.8 | 7.5 | 0.79 | - | - |
| | 12 | 615 | 630 | 635 | 605 | 4.5 | 11.9 | 1.27 | - | - |
| Comp. Ex. | 1 | 585 | 600 | 645 | 615 | 4.4 | 48.5 | 1.66 | - | - |
| | 2 | 615 | 630 | 545 | 515 | 4.1 | 24.1 | 0 | - | - |
| | 3 | 625 | 640 | 605 | 575 | 4.2 | 15.9 | 0.48 | 0.326 | 36 |
| | 4 | 625 | 640 | 625 | 595 | 4.4 | 23.7 | 0.89 | 0.348 | 40 |
| | 5 | 645 | 660 | 575 | 545 | 4.4 | 113.4 | 0 | 0.56 | 50 |

As shown in Table 1, in each of Examples No. 1 to No. 12, since the Ti₂O₃/TiO₂ ratio in Raman was within a range of 0.08 to 1.45 and the void ratio was all 0.3 or less, the contact resistance after immersion in a test solution for four days was 15 mΩ·cm² or less. In this way, Examples No. 1 to No. 12 indicated that excellent conductivity can be maintained for a long period of time.

Fig. 10 described above is a graph obtained by performing the peak separation on a Raman spectrum for Example No. 12. As illustrated in Fig. 10, since I1 was 434.5, I2 was 475.9, I3 was 76.0 in Example No. 12, the Ti₂O₃/TiO₂ ratio was 1.27 based on (475.9+76.0)/434.5.

In contrast, the Ti₂O₃/TiO₂ ratio was 1.66 in Comparative Example No. 1, which exceeded the upper limit of 1.45 of the range of the present invention, and thus the contact resistance after immersion in the test solution for four days exceeded 15 mΩ·cm². The reason is considered to be that, formation of Ti₂O₃ was excessive due to a high temperature of reduction treatment compared to a low temperature of oxidation treatment.

The Ti₂O₃/TiO₂ ratio was 0.00 in Comparative Example No. 2, which is less than the lower limit of 0.08 of the range of the present invention, and thus the contact resistance after immersion in the test solution for four days exceeded 15 mΩ·cm². The reason is considered to be that, reduction was not effective and Ti₂O₃ was hardly formed due to a low temperature of reduction treatment compared to a high temperature of oxidation treatment, and thus at the time of preparation of the press-molded simulated material, partial peeling due to tension or formation of a large number of cracks occurred, and corrosion progressed.

In Comparative Example No. 3 and Comparative Example No. 4, the Ti₂O₃/TiO₂ ratios were within the range of the present invention, but the void ratios were 0.326 and 0.348, respectively, which exceeded the upper limit of 0.3 of the range of the present invention, and thus the contact resistance after immersion in the test solution for four days exceeded 15 mΩ·cm². The reason is considered to be that voids were excessively formed due to the high temperature of oxidation treatment.

Fig. 2 described above is a view illustrating a cross section in Comparative Example No. 5. In Comparative Example No. 5, the Ti₂O₃/TiO₂ ratio was 0.00, which was less than the lower limit of 0.08 of the range of the present invention. In addition, as illustrated in Fig. 2, a large number of voids were formed, and a void ratio was 0.56, which exceeded the upper limit of 0.3 of the range of the present invention, and thus the contact resistance after immersion in the test solution for four days exceeded 15 mΩ·cm², which was significantly deteriorated. The reason is considered to be that, the formation of Ti₂O₃ was insufficient due to a low temperature of reduction treatment compared to a high temperature of oxidation treatment, and formation of interface voids was excessive due to a high oxidation temperature.

### [Test 2. Effect of Particle Diameter (D50) of Carbon Particles and Conditions of Reduction Treatment on Performance]

Surface-treated titanium materials were manufactured by variously changing the particle diameter (D50) of the carbon particles and the conditions of the reduction treatment. Detailed manufacturing conditions, measurement conditions, and the like are as follows.

### <Manufacturing of Surface-treated Titanium Material>

### (Preparation of Titanium Substrate and Annealing Step)

Annealing of a titanium foil coil having a width of 48 cm and a thickness of 0.1 mm was performed in the same manner as in Test 1.

### (Coating Step with Carbon Particles)

A titanium foil unwound from the annealed titanium foil coil was installed on a die coating line, and both surfaces of the titanium foil were coated with the same coating material as that in Test 1 using a die coater such that an applying weight of the coating material after drying was 50 µg/cm² to 70 µg/cm² (28 µg/cm² to 39 µg/cm² in terms of carbon black). In the present Examples, two types of carbon black were used of which the particle diameters (D50) of the carbon particles (carbon black) were 62 nm and 109 nm.

### (Oxidation Treatment Step)

The oxidation treatment was performed using the continuous annealing furnace 21 illustrated in Fig. 7. First, after the titanium foil coil 26 coated with a coating material containing carbon black on both surfaces thereof was installed in the first chamber 22 of the continuous annealing furnace 21 and subjected to vacuum drawing, the temperature of the titanium foil 26a cannot be measured, and therefore, a sheath heater was heated to adjust the estimated temperature of the titanium foil 26a to 615°C to 620°C. Next, oxygen gas and Ar gas were introduced such that the oxygen partial pressure in the continuous annealing furnace 21 was 20 Pa in calculation. Then, a line speed was set such that a time for passing through the second chamber 23 serving as a heating zone was 17 seconds, and the titanium foil 26a was conveyed to the third chamber 24. Thereafter, the titanium foil 26a was cooled in the third chamber 24, then wound in the fourth chamber 25, and again formed into a titanium foil coil 27.

### (Washing Step)

The oxidized titanium foil coil 27 was taken out from the continuous annealing furnace 21, and in order to remove excess carbon black not adhering tightly to the surface of the titanium foil 13, the titanium foil coil 27 was set in a continuous water washing equipment having a brush washing tank and an ultrasonic washing tank, and line washing was performed.

### (Reduction Treatment Step)

A titanium foil coil using carbon black having a particle diameter (D50) of 62 nm and a titanium foil coil using carbon black having a particle diameter (D50) of 109 nm were subjected to the reduction treatment using the continuous annealing furnace 21 illustrated in Fig. 7 in which a carbon heater was mounted. First, after the titanium foil coils were installed in the first chamber 22 and subjected to vacuum drawing, the temperature of the titanium foil 26a cannot be measured, and therefore, the sheath heater was heated to adjust the estimated temperature of the titanium foil 26a until the estimated temperature reached 605°C. Next, a line speed was set such that a time for passing through the second chamber 23 serving as a heating zone was 12 seconds, and the titanium foil 26a was conveyed to the third chamber 24. Thereafter, the titanium foil 26a was cooled in the third chamber 24, then wound in the fourth chamber 25, and again formed into a titanium foil coil.

### (Preparation of Press-molded Simulated Material)

A press-molded simulated material was prepared in the same manner as in Test 1.

### <Measurement and Analysis>

### (Measurement of Initial Contact Resistance and Contact Resistance after Immersion)

The initial contact resistance and the contact resistance after immersion for four days were measured for the press-molded simulated material in the same manner as in Test 1.

### (Measurement of Adhesion)

In the length direction of a surface between the standard lines of the press-molded simulated material pulled at an elongation percentage of 30%, a tape (Cellotape (registered trademark): product number 405 (manufactured by NICHIBAN CO., LTD.)) having a width of 12 mm and a length of about 5 cm was attached in a length of about 2 cm from one end portion of the tape in the length direction. Then, after the attached portion was rubbed with a soft cloth, the tape was pulled to such an extent that the tape was not peeled off such that the tape in a portion not adhered to an attached surface from the other end portion of the tape to a boundary of the attached portion of the tape was at 90° with respect to the attached surface. Thereafter, in a state where the angle of 90° was substantially maintained, a force was applied such that the tape was peeled off in about one second to two seconds, and the tape was peeled off from the press-molded simulated material. In this way, a tape peeling test was performed, and the adhesion of the surface layer was measured by visually observing the surface from which the tape was peeled off or the peeled tape.

### (Measurement of Ti₂O₃/TiO₂ Ratio)

Among resistance measurement portions of the titanium foil before the press-molded simulated material 34 was prepared, a region of 0.2 mm × 0.2 mm was measured over a wave number range of 150 cm⁻¹ to 2,000 cm⁻¹ by Raman spectroscopic analysis, and the Ti₂O₃/TiO₂ ratio was determined in the same manner as in Test 1. For the Raman spectroscopic analysis, a microscopic laser Raman spectrometer LabRAM HR-800 (manufactured by Jobin Yvon) was used. In addition, measurement conditions were set as follows: laser wavelength: 514.6 nm; laser power: 20 mW; diffraction grating: 300 gr/mm; confocal hole diameter: 100 µm; and exposure time × the number of times of integration: 120 seconds × 8 times.

### (Measurement of Weight of Carbon Black (Sc/(St+Sc)))

The surface-treated titanium foil was cut into a piece having a size of 2 cm × 5 cm, a weight thereof was measured, then a surface layer on one surface was polished and removed by buffing, and carbon black was burned by a burning method. For the burning, a carbon/sulfur analyzer CS844 (manufactured by LECO JAPAN CORPORATION) was used.

Then, an amount of CO₂ generated by the burning was quantified to calculate the weight of carbon black incorporated into the surface layer on the one surface. In addition, a surface area of the one surface was determined by dividing the weight of the titanium foil measured in advance by a thickness (0.1 mm) of the titanium foil and the density of titanium, and the weight of the carbon black in the surface layer per unit area was determined by dividing the calculated weight of the carbon black by the surface area of the one surface.

Measurement results of a particle diameter (D50) of the carbon particles, estimated temperatures of the titanium foil at the time of oxidation treatment and reduction treatment, contact resistances at an initial stage and after immersion for four days, the Ti₂O₃/TiO₂ ratio, and the weight of carbon black of each test piece are shown in Table 2 below. Based on Figs. 13 and 14 and the estimated temperatures of titanium foil during oxidation treatment in Example No. 13, Example No. 14, and Comparative Example No. 6 shown in Table 2, it can be determined that the film thickness T is 25 nm or more and the void ratio is 0.30 or less, and thus the film thickness T and the void ratio are not measured. In addition, in Comparative Example No. 6, the oxidation treatment was performed under the same conditions as in Examples Nos. 13 and 14 without coating with carbon black, and then the reduction treatment was performed without washing. Therefore, it is clear that the weight of the carbon black in Comparative Example No. 6 is zero, and thus weight measurement by a burning method was not performed.

[Table 2]

**Table 2**

| No. | | Particle diameter D50 of carbon particle (nm) | Estimated temperature of titanium foil during oxidation treatment (°C) | Estimated temperature of titanium foil during reduction treatment (°C) | Contact resistance (mΩ·cm²) | | Ti₂O₃/TiO₂ ratio (I2+I3)/I1 | Weight of carbon black (µg/cm²) |
|---|---|---|---|---|---|---|---|---|
| | | | | | Initial stage | After immersion for four days | | |
| Ex. | 13 | 62 | 615 to 620 | 605 | 3 | 6.7 | 1.07 | 2.12 |
| | 14 | 107 | 615 to 620 | 605 | 3.9 | 7.5 | 1.08 | 1.42 |
| Comp. Ex. | 6 | none | 615 to 620 | 605 | 11.1 | 129 | 1.27 | 0 |

In Example No. 13 and Example No. 14, the Ti₂O₃/TiO₂ ratio was within the range of 0.08 to 1.45, and thus the contact resistance after immersion in the test solution for four days was 15 mΩ·cm² or less. In addition, a result was shown that in the tape peeling test, peeling was not visually observed, and the adhesion was also good. When Example No. 13 and Example No. 14 are compared, although the Ti₂O₃/TiO₂ ratios were almost the same, the contact resistance in Example No. 13 in which the particle diameter D50 is 62 nm is lower. The reason is considered to be that, the weight of carbon black per cm² in the surface layer, that is, a proportion of the carbon black in the surface layer incorporated into the surface layer is larger in Example No. 13 in which the particle diameter D50 is small than in Example No. 14 in which the particle diameter D50 is large, and thus the number of conductive paths is increased. As described above, the smaller the particle diameter D50 of the carbon particles, the larger the conductivity.

On the other hand, in Comparative Example No. 6, since the surface layer does not contain carbon particles, the initial contact resistance shows a good value, but the contact resistance after immersion for four days significantly exceeded 15 mΩ·cm². From this result, it was shown that the carbon particles (carbon black) were a stable conductive path, and the long-term stability of conductivity was not maintained unless carbon black was contained.

### [Test 3. Effect of Film Thickness T on Performance]

Surface-treated titanium materials were manufactured by variously changing the film thickness T. In Test 3, in order to confirm the effect of the film thickness T, three types of heater set temperatures of 615°C, 595°C, and 535°C at the time of oxidation treatment were set to prepare test pieces. Manufacturing conditions and measurement conditions of the test pieces are shown below.

### <Manufacturing of Surface-treated Titanium Material>

A surface-treated titanium material was manufactured in the same manner as in Test 1.

### <Measurement and Analysis>

### (Measurement of Initial Contact Resistance and Contact Resistance after Immersion)

The initial contact resistance and the contact resistance after immersion for four days were measured for the press-molded simulated material in the same manner as in Test 1.

### (Measurement of Ti₂O₃/TiO₂ Ratio)

The Ti₂O₃/TiO₂ Ratio was measured in the same manner as in Test 1.

### (Measurement of Void Ratio and Film Thickness T)

The surface of the surface-treated titanium material obtained by variously changing the temperature during the oxidation treatment was observed with an optical microscope, and a portion with a color having the highest surface ratio was subjected to cross-section processing with a Cross section polisher (CP). Then, a backscattered electron image of the cross section was captured by an FE-SEM (S-5000, manufactured by Hitachi High-Tech Corporation) at an acceleration voltage of 2.0 kV and a magnification of 300,000 times, and the film thickness T was measured. In addition, the ratio of a length occupied by voids to a length of the interface (void ratio: L2/L1) was also measured.

### (Measurement of Content of Carbon Particles (Carbon Black) in Titanium Oxide Layer)

The portion with a color having the highest surface ratio of the surface-treated titanium material was subjected to cross-section processing using a CP, the cross section thereof was captured by the FE-SEM, and the image was binarized in a region from a position where the interface between the passive film and the metallic titanium layer was as straight as possible to a position above the interface by the film thickness T. In this case, the carbon black was set to black, the titanium oxide layer was set to white, and a portion protruding from the surface of the titanium oxide layer was not included as the carbon black. An area occupied by the carbon black was defined as Sc, and a total cross-sectional area of the titanium oxide layer and the passive film was defined as St.

Then, the number of black dots, which is a value proportional to Sc, and the number of black and white dots, which is a value proportional to St+Sc, were measured, and a content (%) was calculated as {Sc/(St+Sc)}×100.

Measurement results of temperatures at the time of oxidation treatment and reduction treatment, contact resistances at the initial stage and after immersion for four days, the Ti₂O₃/TiO₂ ratio, the void ratio, the film thickness T, and the content of carbon black of each test piece are shown in Table 3 below.

[Table 3]

**Table 3**

| No. | | Temperature of oxidation treatment (°C) | | Temperature of reduction treatment (°C) | | Contact resistance (mΩ·cm²) | | Ti₂O₃/TiO₂ ratio (I2+I3)/I1 | Void ratio L2/L1 | Film thickness T (nm) | Content of carbon black (%) {Sc/(St+Sc)} ×100 |
|---|---|---|---|---|---|---|---|---|---|---|---|
| | | Heater set temperature | Estimated temperature of titanium foil | Heater set temperature | Estimated temperature of titanium foil | Initial stage | After immersion for four days | | | | |
| Ex. | 15 | 615 | 630 | 575 | 545 | 5 | 10.8 | 0.17 | 0.133 | 32 | 34 |
| | 16 | 595 | 610 | 575 | 545 | 5.1 | 6.3 | 0.09 | 0.103 | 31 | 31 |
| **Comp.** Ex. | 7 | 535 | 550 | 575 | 545 | 7.3 | 29.5 | 0.33 | 0.05 | 22 | 12 |

As shown in Table 3, in Example No. 15 and Example No. 16, the film thickness T exceeded 25 nm, the Ti₂O₃/TiO₂ ratio was within the range of 0.08 to 1.45, and the void ratio was also within the range of the present invention, and thus the contact resistance after immersion in a test solution for four days was 15 mΩ·cm² or less.

On the other hand, in Comparative Example No. 7, the Ti₂O₃/TiO₂ ratio and the void ratio were within the range of the present invention, but the film thickness was 21 nm, which was less than the lower limit of the range of the present invention, and thus the contact resistance after immersion in the test solution for four days exceeded 15 mΩ·cm².

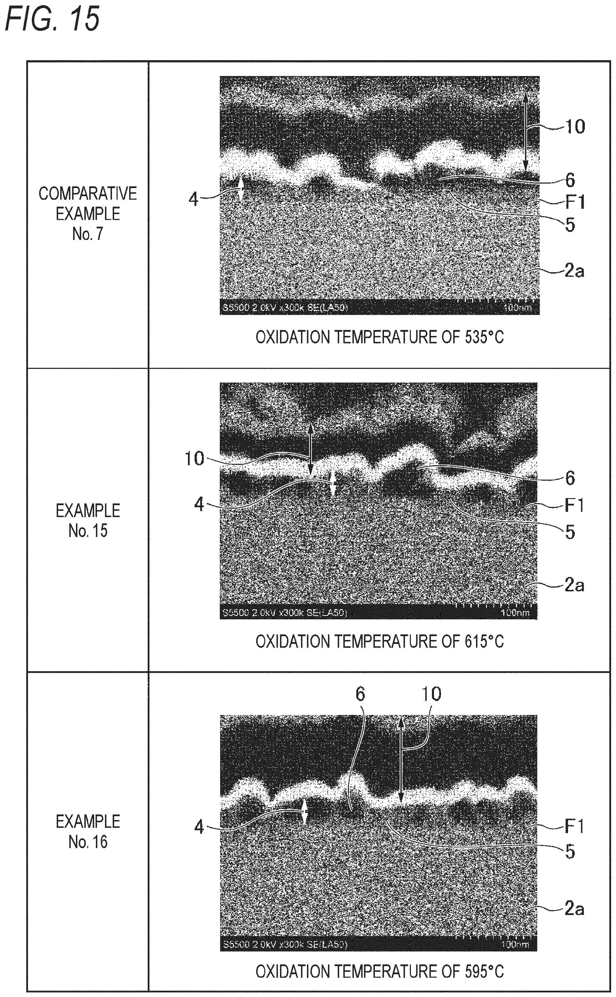

Fig. 15 is a drawing-substitute photograph illustrating cross sections of Comparative Example No. 7, Example No. 15, and Example No. 16 captured by an SEM. In Comparative Example No. 7, it was shown that the carbon particles (carbon black) 6 only rest on the surface of the titanium oxide layer 5, and the carbon particles 6 were not incorporated into the inside of the titanium oxide layer 5.

On the other hand, in each of Example No. 15 and Example No. 16, the carbon particles 6 were incorporated into the titanium oxide layer 5 and dispersed.

(1), (2), and (3) of Fig. 4 described above are photographs showing a cross section in Comparative Example No. 7, the content of carbon black is lower than those in Examples, and the contact resistance is higher than those in Examples. The reason is considered to be that, the carbon black could not be sufficiently incorporated into the titanium oxide layer 5 because the film thickness T was thin.

### [Test 4. Effect of Presence or Absence of Annealing on Performance]

An effect of presence or absence of annealing to the titanium substrate on the 0.2% yield strength of the obtained surface-treated titanium material was confirmed.

The continuous annealing furnace 21 illustrated in Fig. 7 was used to set a temperature and a line speed of the carbon heater 28 such that the attained temperature of the titanium foil 26a was 780°C and a passage time in the second chamber 23 serving as a heating zone was 40 seconds. Then, a titanium rolled foil having a thickness of 0.1 mm was annealed, and was subjected to surface treatment in the same manner as in Test 1.

On the other hand, the titanium rolled foil that was not annealed was subjected to the surface treatment in the same manner as in Test 1, and 0.2% yield strength in the longitudinal direction (L direction) and the width direction (T direction) of the coil were measured. Six coils were annealed and four coils were not annealed, and the 0.2% yield strengths thereof were measured.

Measurement results of the 0.2% yield strength in the L direction and the T direction are shown in Table 4 below.

[Table 4]

**Table 4**

| No. | | | 0.2% yield strength (MPa) | |
|---|---|---|---|---|
| | | | L direction | T direction |
| Ex. | 17 | With annealing | 135 | 199 |
| | 18 | | 140 | 205 |
| | 19 | | 143 | 208 |
| | 20 | | 119 | 185 |
| | 21 | | 124 | 192 |
| | 22 | | 129 | 192 |
| Comp. Ex. | 8 | Without annealing | 207 | 230 |
| | 9 | | 213 | 240 |
| | 10 | | 239 | 256 |
| | 11 | | 221 | 257 |

As shown in Table 4, in Example No. 17 to Example No. 22, surface-treated titanium materials were prepared using the annealed titanium substrate, the 0.2% yield strength in the L direction was 119 MPa to 143 MPa, and the 0.2% yield strength in the T direction was 185 MPa to 208 MPa.

A range of the 0.2% yield strength was preferably 110 MPa to 150 MPa in the L direction and 180 MPa to 215 MPa in the T direction. Therefore, the surface-treated titanium materials of Examples were all within the preferable range of the 0.2% yield strength, although there is some variation.

On the other hand, in Comparative Example No. 8 to Comparative Example No. 11, surface-treated titanium materials were prepared using the titanium substrate which was not annealed, the 0.2% yield strength in the L direction was 207 MPa to 239 MPa, and the 0.2% yield strength in the T direction was 230 MPa to 257 MPa, which were higher than the preferable range. From these results, it was shown that a step of annealing the titanium substrate is necessary, and when this step is not performed, the 0.2% yield strength becomes too high and a desired shape cannot be obtained when press molding of narrow grooves was performed.

The present application is based on a Japanese Patent Application (Patent Application No. 2020-197464) filed on November 27, 2020.

### REFERENCE SIGNS LIST

1: surface-treated titanium material
2: titanium substrate
3: passive film
4: surface layer
5: titanium oxide layer
6: carbon particle
7: void
13: titanium foil

## Claims

1. A surface-treated titanium material for a fuel cell separator, comprising:
a titanium substrate having a passive film on a surface of the titanium substrate; and
a surface layer formed on the titanium substrate, wherein
the surface layer includes a titanium oxide layer and carbon particles,
the carbon particles are dispersed in an inside of the titanium oxide layer,
the titanium oxide layer contains Ti₂O₃ and TiO₂,
a total film thickness of the titanium oxide layer and the passive film is 25 nm or more,
in a case where a peak separation is performed on a Raman spectrum of a combination of the titanium oxide layer and the passive film, as set out in the description, when a height of a peak obtained in a range of 235 cm⁻¹ to 252 cm⁻¹ of a Raman shift representing TiO₂ is defined as I1, a height of a peak obtained in a range of 260 cm⁻¹ to 276 cm⁻¹ of a Raman shift representing Ti₂O₃ is defined as 12, and a height of a peak obtained in a range of 292 cm⁻¹ to 303 cm⁻¹ of a Raman shift representing Ti₂O₃ is defined as I3, (I2+I3)/I1 is 0.08 or more and 1.45 or less, and
in a case where an arbitrary cross section is observed with a field emission scanning electron microscope, when a length of an interface between the titanium oxide layer and the titanium substrate in an observation region is defined as L1 and a length of a void existing in the interface is defined as L2, L2/L1 is 0.30 or less.

2. A method for manufacturing the surface-treated titanium material for a fuel cell separator according to claim 1, comprising:
a step of annealing a titanium substrate;
a step of coating a surface of the annealed titanium substrate with carbon particles;
an oxidation treatment step of thermally treating the titanium substrate coated with the carbon particles in an oxidizing atmosphere to form a titanium oxide layer including the carbon particles;
a washing step of removing carbon particles not adhering tightly to the titanium oxide layer from a surface of the titanium oxide layer; and
a reduction treatment step of heat-treating the titanium substrate having the titanium oxide layer formed thereon in a vacuum or in an inert gas atmosphere to form a surface layer by generating Ti₂O₃ in the reduction treatment step and forming a titanium oxide layer containing Ti₂O₃ and TiO₂,
wherein an average carbon concentration from the outermost surface of the titanium substrate to a position at a depth of 50 nm measured by X-ray photoelectron spectroscopy is 10 atom% or less.

3. A method for manufacturing the surface-treated titanium material for a fuel cell separator according to claim 1, comprising:
a step of annealing a titanium substrate;
a step of coating a surface of the annealed titanium substrate with carbon particles;
an oxidation treatment step of thermally treating the titanium substrate coated with the carbon particles in an oxidizing atmosphere to form a titanium oxide layer including the carbon particles;
a reduction treatment step of heat-treating the titanium substrate having the titanium oxide layer formed thereon in a vacuum or in an inert gas atmosphere to form a surface layer by generating Ti₂O₃ in the reduction treatment step and forming a titanium oxide layer containing Ti₂O₃ and TiO₂; and
a washing step of removing carbon particles not adhering tightly to the titanium oxide layer from a surface of the titanium oxide layer,
wherein an average carbon concentration from the outermost surface of the titanium substrate to a position at a depth of 50 nm measured by X-ray photoelectron spectroscopy is10 atom% or less.

## Patentansprüche

1. Oberflächenbehandeltes Titanmaterial für einen Brennstoffzellenseparator, umfassend:
ein Titansubstrat mit einem passiven Film auf einer Oberfläche des Titansubstrats; und
eine auf dem Titansubstrat gebildete Oberflächenschicht, wobei
die Oberflächenschicht eine Titanoxidschicht und Kohlenstoffteilchen umfasst,
die Kohlenstoffteilchen im Inneren der Titanoxidschicht dispergiert sind,
die Titanoxidschicht Ti₂O₃ und TiO₂ enthält,
die Gesamtfilmdicke der Titanoxidschicht und des passiven Films 25 nm oder mehr beträgt, in einem Fall, in dem in einem Raman-Spektrum eine Peaktrennung einer Kombination von der Titanoxidschicht und dem passiven Film durchgeführt wird, wie in der Beschreibung dargelegt, wenn eine Höhe eines Peaks, erhalten in einem Bereich von 235 cm⁻¹ bis 252 cm⁻¹, einer TiO₂ darstellenden Raman-Verschiebung als I1 definiert ist, eine Höhe eines Peaks, erhalten in einem Bereich von 260 cm⁻¹ bis 276 cm⁻¹, einer Ti₂O₃ darstellenden Raman-Verschiebung als I2 definiert ist, und eine Höhe eines Peaks, erhalten in einem Bereich von 292 cm⁻¹ bis 303 cm⁻¹, einer Ti₂O₃ darstellenden Raman-Verschiebung als I3 definiert ist, (I2+I3)/I1 0,08 oder mehr und 1,45 oder weniger beträgt, und
in einem Fall, in dem ein beliebiger Querschnitt mit einem Feldemissions-Rasterelektronenmikroskop beobachtet wird, wenn eine Länge einer Schnittstelle zwischen der Titanoxidschicht und dem Titansubstrat in einem Beobachtungsbereich als L1 definiert ist und eine Länge eines in der Schnittstelle vorhandenen Hohlraums als L2definiert ist, L2/L1 0,30 oder weniger beträgt.

2. Verfahren zur Herstellung des oberflächenbehandelten Titanmaterials für einen Brennstoffzellenseparator nach Anspruch 1, umfassend:
einen Schritt des Glühens eines Titansubstrats;
einen Schritt des Beschichtens einer Oberfläche des geglühten Titansubstrats mit Kohlenstoffteilchen;
einen Oxidationsbehandlungsschritt des thermischen Behandelns des mit den Kohlenstoffteilchen beschichteten Titansubstrats in einer oxidierenden Atmosphäre, um eine Titanoxidschicht zu bilden, welche die Kohlenstoffteilchen enthält;
einen Waschschritt des Entfernens von Kohlenstoffteilchen, die nicht fest an der Titanoxidschicht haften, von einer Oberfläche der Titanoxidschicht; und
einen Reduktionsbehandlungsschritt des Wärmebehandelns des Titansubstrats mit der darauf gebildeten Titanoxidschicht in einem Vakuum oder in einer Inertgasatmosphäre, um eine Oberflächenschicht zu bilden durch Erzeugen von Ti₂O₃ im Reduktionsbehandlungsschritt und Bilden einer Titanoxidschicht, die Ti₂O₃ und TiO₂ enthält,
wobei eine durchschnittliche Kohlenstoffkonzentration von der äußersten Oberfläche des Titansubstrats bis zu einer Position in einer Tiefe von 50 nm, gemessen durch Röntgen-Photoelektronenspektroskopie, 10 Atom- % oder weniger beträgt.

3. Verfahren zur Herstellung des oberflächenbehandelten Titanmaterials für einen Brennstoffzellenseparator nach Anspruch 1, umfassend:
einen Schritt des Glühens eines Titansubstrats;
einen Schritt des Beschichtens einer Oberfläche des geglühten Titansubstrats mit Kohlenstoffteilchen;
einen Oxidationsbehandlungsschritt des thermischen Behandelns des mit den Kohlenstoffteilchen beschichteten Titansubstrats in einer oxidierenden Atmosphäre, um eine Titanoxidschicht zu bilden, welche die Kohlenstoffteilchen enthält;
einen Reduktionsbehandlungsschritt des Wärmebehandelns des Titansubstrats mit der darauf gebildeten Titanoxidschicht in einem Vakuum oder in einer Inertgasatmosphäre, um eine Oberflächenschicht zu bilden durch Erzeugen von Ti₂O₃ in dem
Reduktionsbehandlungsschritt und Bilden einer Titanoxidschicht, die Ti₂O₃ und TiO₂ enthält; und
einen Waschschritt des Entfernens von Kohlenstoffteilchen, die nicht fest an der Titanoxidschicht haften, von einer Oberfläche der Titanoxidschicht,
wobei eine durchschnittliche Kohlenstoffkonzentration von der äußersten Oberfläche des Titansubstrats bis zu einer Position in einer Tiefe von 50 nm, gemessen durch Röntgen-Photoelektronenspektroskopie, 10 Atom-% oder weniger beträgt.

## Revendications

1. Matériau de titane traité en surface pour un séparateur de pile à combustible, comprenant :
un substrat en titane ayant un film passif sur une surface du substrat en titane ; et
une couche de surface formée sur le substrat en titane, dans lequel
la couche de surface inclut une couche d'oxyde de titane et des particules de carbone,
les particules de carbone sont dispersées dans un intérieur de la couche d'oxyde de titane,
la couche d'oxyde de titane contient du Ti₂O₃ et TiO₂,
une épaisseur de film totale de la couche d'oxyde de titane et du film passif est de 25 nm ou plus,
dans un cas où une séparation de pics est réalisée sur un spectre Raman d'une combinaison de la couche d'oxyde de titane et du film passif, tel qu'établi dans la description, lorsqu'une hauteur d'un pic obtenu dans une plage de 235 cm⁻¹ à 252 cm⁻¹ d'un glissement Raman représentant TiO₂ est définie comme I1, une hauteur d'un pic obtenu dans une plage de 260 cm⁻¹ à 276 cm⁻¹ d'un glissement Raman représentant Ti₂O₃ est définie comme I2, et une hauteur d'un pic obtenu dans une plage de 292 cm⁻¹ à 303 cm⁻¹ d'un glissement Raman représentant Ti₂O₃ est définie comme I3, (I2+I3)/I1 est de 0,08 ou plus et 1,45 ou moins, et
dans un cas où une section transversale arbitraire est observée avec un microscope électronique à balayage à émission de champ, lorsqu'une longueur d'une interface entre la couche d'oxyde de titane et le substrat en titane dans une région d'observation est définie comme L1 et une longueur d'un vide existant dans l'interface est définie comme L2, L2/L1 est de 0,30 ou moins.

2. Procédé de fabrication du matériau de titane traité en surface pour un séparateur de pile à combustible selon la revendication 1, comprenant :
une étape de recuit d'un substrat en titane ;
une étape d'enrobage d'une surface du substrat en titane recuit de particules de carbone ;
une étape de traitement oxydatif consistant à traiter thermiquement le substrat en titane enrobé des particules de carbone dans une atmosphère oxydante pour former une couche d'oxyde de titane incluant les particules de carbone ;
une étape de lavage consistant à éliminer des particules de carbone n'adhérant pas fermement à la couche d'oxyde de titane d'une surface de la couche d'oxyde de titane ; et
une étape de traitement réducteur consistant à traiter thermiquement le substrat en titane ayant la couche d'oxyde de titane formée sur lui dans un vide ou dans une atmosphère de gaz inerte pour former une couche de surface en générant du Ti₂O₃ dans l'étape de traitement réducteur et formant une couche d'oxyde de titane contenant du Ti₂O₃ et TiO₂,
dans lequel une concentration en carbone moyenne de la surface externe du substrat en titane à une position à une profondeur de 50 nm mesurée par spectroscopie photoélectronique X est de 10 % atomique ou moins.

3. Procédé de fabrication du matériau de titane traité en surface pour un séparateur de pile à combustible selon la revendication 1, comprenant :
une étape de recuit d'un substrat en titane ;
une étape d'enrobage d'une surface du substrat en titane recuit de particules de carbone ;
une étape de traitement oxydatif consistant à traiter thermiquement le substrat en titane enrobé des particules de carbone dans une atmosphère oxydante pour former une couche d'oxyde de titane incluant les particules de carbone ;
une étape de traitement réducteur consistant à traiter thermiquement le substrat en titane ayant la couche d'oxyde de titane formée sur lui dans un vide ou dans une atmosphère de gaz inerte pour former une couche de surface en générant du Ti₂O₃ dans l'étape de traitement réducteur et formant une couche d'oxyde de titane contenant du Ti₂O₃ et TiO₂ ; et
une étape de lavage consistant à éliminer des particules de carbone n'adhérant pas fermement à la couche d'oxyde de titane d'une surface de la couche d'oxyde de titane,
dans lequel une concentration en carbone moyenne de la surface externe du substrat en titane à une position à une profondeur de 50 nm mesurée par spectroscopie photoélectronique X est de 10 % atomique ou moins.
